# EUROPEAN PATENT APPLICATION

(11) **EP 4 412 314 A1**
(43) Date of publication of application: **07.08.2024**
(21) Application number: 22874902.4
(22) Date of filing: 27.09.2022
(51) Int. Cl.: H04W 52/02, H04L 5/00

(54) **DETECTION TRIGGERING METHOD, DEVICE, AND READABLE STORAGE MEDIUM**

(30) Priority: 29.09.2021 CN 202111155066
(71) Applicant: Vivo Mobile Communication Co., Ltd., Dongguan, Guangdong 523863 (CN)
(72) Inventor: LIU, Siqi, Dongguan, Guangdong 523863 (CN); JI, Zichao, Dongguan, Guangdong 523863 (CN)
(74) Representative: Lavoix
(86) International application number: PCT/CN2022/121683
(87) International publication number: WO 2023/051517

(57) **Abstract**

A sensing trigger method, a device, and a readable storage medium are provided. The method includes: determining, by a terminal according to a first preset condition and/or a second preset condition, whether to determine sensing occasions and/or trigger sensing for a first process, where the first preset condition and/or the second preset condition is associated with target sensing occasions, the target sensing occasions include first sensing occasions or the target sensing occasions include first sensing occasions and second sensing occasions, the first sensing occasions are sensing occasions corresponding to the first process, the second sensing occasions do not overlap at least part of the first sensing occasions, at least part of the second sensing occasions correspond to a second process, and the second process is a process different from the first process.

## Description

### CROSS-REFERENCE TO RELATED APPLICATIONS

This application claims priority to Chinese Patent Application No. 202111155066.4 filed on September 29, 2021, which is incorporated herein by reference in its entirety.

### TECHNICAL FIELD

This application relates to the field of communication technologies, and in particular, to a sensing trigger method, a device, and a readable storage medium.

### BACKGROUND

Gains brought by triggering sensing (sensing) in some cases are not large. For example, because resources that can be used for performing sensing are too few, enough sensing results cannot be provided, and consequently collision from another UE still cannot be avoided. Therefore, it is necessary to determine a condition for triggering sensing, and behaviors of a terminal in cases that the condition is satisfied and the condition is not satisfied, to cause the terminal to properly trigger sensing, to avoid a case that the terminal triggers sensing improperly but performance cannot be improved and additional power is consumed.

### SUMMARY

An objective of embodiments of this application is to provide a sensing trigger method, a device, and a readable storage medium, to resolve the problem in the sensing trigger method in the related technology that a terminal triggers sensing improperly but performance cannot be improved and additional power is consumed.

A first aspect provides a sensing trigger method, including:
determining, by a terminal according to a first preset condition and/or a second preset condition, whether to determine sensing occasions and/or trigger sensing for a first process, where
the first preset condition and/or the second preset condition is associated with target sensing occasions, the target sensing occasions include first sensing occasions or the target sensing occasions include first sensing occasions and second sensing occasions, the first sensing occasions are sensing occasions corresponding to the first process, the second sensing occasions do not overlap at least part of the first sensing occasions, at least part of the second sensing occasions are sensing occasions corresponding to a second process, and the second process is a process different from the first process.

A second aspect provides a sensing trigger apparatus, including:
a first determining module, configured for a terminal to determine, according to a first preset condition and/or a second preset condition, whether to determine sensing occasions and/or trigger sensing for a first process, where
the first preset condition and/or the second preset condition is associated with target sensing occasions, the target sensing occasions include first sensing occasions or the target sensing occasions include first sensing occasions and second sensing occasions, the first sensing occasions are sensing occasions corresponding to the first process, the second sensing occasions do not overlap at least part of the first sensing occasions, at least part of the second sensing occasions are sensing occasions corresponding to a second process, and the second process is a process different from the first process.

A third aspect provides a terminal, including a processor, a memory, and a program stored on the memory and executable on the processor, where the program, when executed by the processor, implements the steps of the method according to the first aspect.

A fourth aspect provides a readable storage medium, storing a program or instructions, where the program or the instructions, when being executed by a processor, implement the processing method according to the first aspect.

A fifth aspect provides a computer program product, stored in a non-transient storage medium, the computer program product is executed by at least one processor to implement the steps of the processing method according to the first aspect.

A sixth aspect provides a chip, including a processor and a communication interface, where the communication interface is coupled to the processor, and the processor is configured to run a program or instructions to implement the processing method according to the first aspect.

A seventh aspect provides a communication device, configured to perform the steps of the method according to the first aspect.

In the embodiments of this application, according to a first preset condition and/or a second preset condition associated with a target sensing occasion, a terminal determines whether to determine sensing occasions and/or trigger sensing for a first process, thereby avoiding a problem that the terminal triggers sensing improperly but performance cannot be improved and additional power is consumed, and consequently the terminal frequently triggers sensing and excess power is consumed.

### BRIEF DESCRIPTION OF THE DRAWINGS

FIG. 1a is a schematic architectural diagram of a wireless communication system;
FIG. 1b is a schematic principle diagram of Long Term Evolution sidelink sensing (LTE sidelink sensing);
FIG. 1c is a schematic principle diagram of LTE partial sensing (partial sensing);
FIG. 1d is a schematic scenario diagram of periodic based partial sensing (periodic based partial sensing, PBPS) and contiguous partial sensing (contiguous paritial sensing, CPS) in new radio (New Radio, NR);
FIG. 1e is a schematic scenario diagram of sidelink (Sidelink, SL) resource pre-emption;
FIG. 1f is a schematic scenario diagram of a triggered slot (triggered slot) and an existing slot (existing slot);
FIG. 2 is a schematic flowchart of a sensing trigger method according to an embodiment of this application;
FIG. 3a to FIG. 3c are schematic diagrams of application scenarios according to an embodiment of this application;
FIG. 4a to FIG. 4b are schematic diagrams of application scenarios according to an embodiment of this application;
FIG. 5 is a schematic structural diagram of a sensing trigger apparatus according to an embodiment of this application; and
FIG. 6 is a schematic structural diagram of a terminal according to an embodiment of this application.

### DETAILED DESCRIPTION

The following clearly and completely describes the technical solutions in the embodiments of this application with reference to the accompanying drawings in the embodiments of this application. Apparently, the described embodiments are part of the embodiments of this application rather than all of the embodiments. All other embodiments obtained by a person of ordinary skill in the art based on the embodiments of this application without creative efforts shall fall within the protection scope of this application.

The specification and claims of this application, and terms "first" and "second" are used to distinguish similar objects, but are unnecessarily used to describe a specified sequence or order. It may be understood that the terms used in such a way are interchangeable in proper circumstances, so that the embodiments of this application can be implemented in other sequences than the sequence illustrated or described herein. In addition, objects distinguished by "first" and "second" are generally of one type, and the quantity of objects is not limited. For example, there may be one or more first objects. In addition, "and/or" in this specification and the claims represents at least one of the connected objects. The character "/" generally represents that the associated object is in an "or" relationship.

It is worth pointing out that, the technologies described in the embodiments of this application are not limited to the Long Term Evolution (Long Term Evolution, LTE)/LTE-Advanced (LTE-Advanced, LTE-A) system, and may be further applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single Carrier Frequency Division Multiple Access (Single Carrier Frequency Division Multiple Access, SC-FDMA), and other systems. The terms "system" and "network" may be used interchangeably in the embodiments of this application. The described technologies can be applied to the systems and radio technologies mentioned above, and can also be applied to other systems and radio technologies. However, the new radio (New Radio, NR) system is described in the following descriptions for the purpose of exemplification, and the NR terms are used in most of the following descriptions. The technologies may also be applied to applications other than NR system applications, such as the 6th Generation (6th Generation, 6G) communication system.

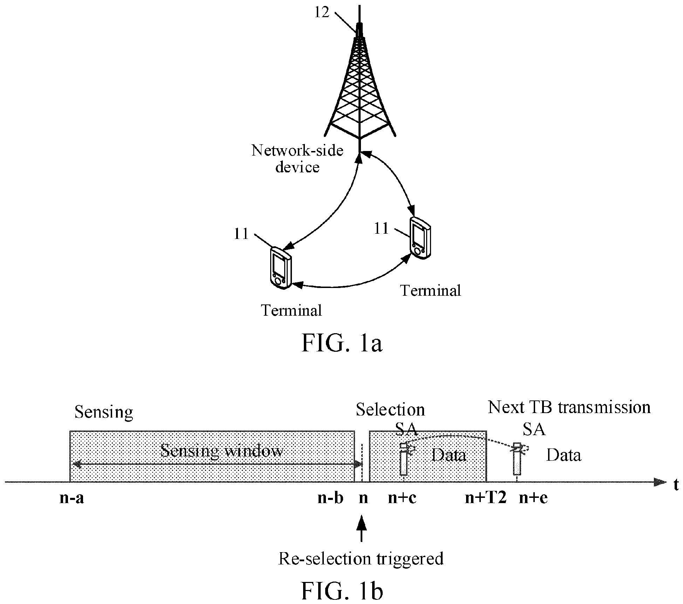

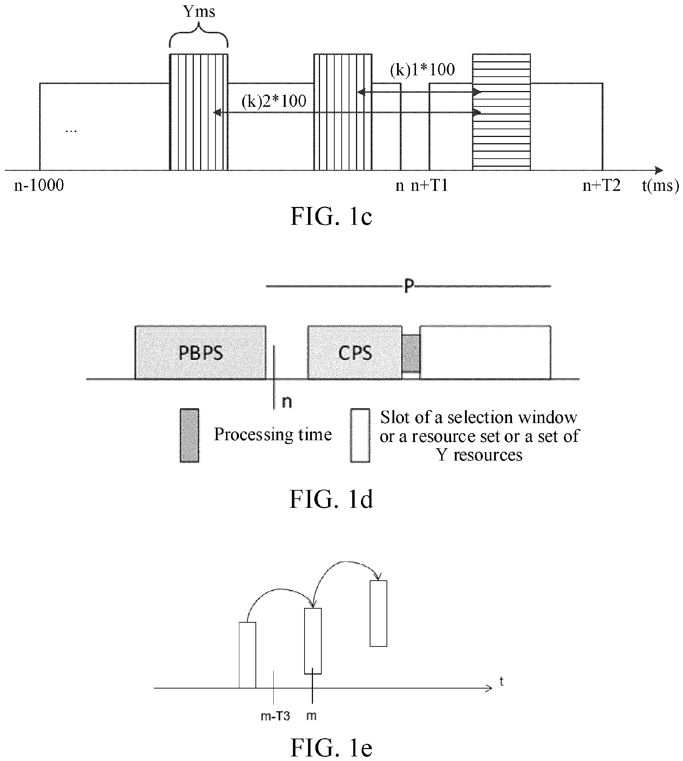

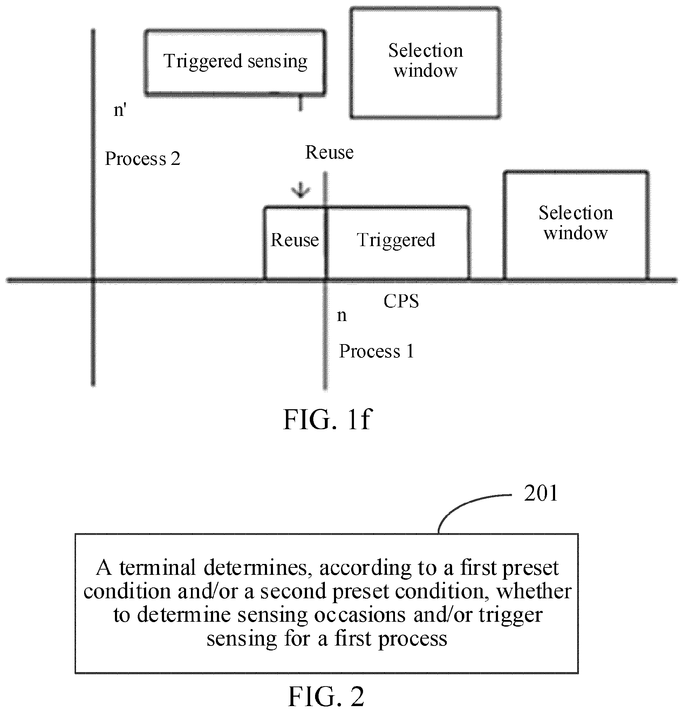

FIG. 1 shows a block diagram of a wireless communication system to which an embodiment of this application is applicable. The wireless communication system includes a terminal 11 and a network-side device 12. The terminal 11 may be also referred to as a terminal device or user equipment (User Equipment, UE). The terminal 11 may be a terminal-side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), a vehicle UE (VUE), a pedestrian UE (PUE), or a smart home appliance (a home device having a wireless communication function, for example, a refrigerator, a television, a washing machine, or furniture). The wearable device includes: a smart watch, a smart band, a smart headset, smart glasses, a smart jewelry (a smart bangle, a smart bracelet, a smart ring, a smart necklace, a smart anklet bracelet, a smart anklet chain, or the like), a smart wristband, a smart costume, a game console, or the like. It should be noted that the specific type of the terminal 11 is not limited in the embodiments of this application. The network-side device 12 may be a base station or a core network. The base station may be referred to as a nodeB, an evolved nodeB, an access point, a base transceiver station (Base Transceiver Station, BTS), a radio base station, a radio transceiver, a basic service set (Basic Service Set, BSS), an extended service set (Extended Service Set, ESS), a nodeB, an evolved nodeB (eNB), a home nodeB, a home evolved nodeB, a Wireless Local Area Network (Wireless Local Area Network, WLAN) access point, a Wireless Fidelity (Wireless Fidelity, Wi-Fi) node, a transmitting receiving point (Transmitting Receiving Point, TRP), or another proper term in the field. As long as a same technical effect is achieved, the base station is not limited to a specified technical term. It should be noted that only a base station in an NR system is used as an example in the embodiments of this application, but a specific type of the base station is not limited.

To better understand the technical solution of this application, the following content is introduced first:

### Sensing in LTE SL

A basic working principle of Long Term Evolution sidelink sensing (LTE sidelink sensing) is as follows:
Referring to FIG. 1b, measurement is performed in a sensing window (sensing window), and scheduling assignment (Scheduling Assignment, SA) and interference measurement are performed in each sensing transmission time interval (Transmission Time Interval, TTI) length. A UE performs resource selection according to the following steps:
(1) A resource for the UE to send data is excluded.
(2) A terminal demodulates received SA, to obtain a resource reserved by another UE. The resource reserved by the another UE is excluded.
(3) Energy sensing is performed in a sensing window, a reference signal strength indication (Reference Signal Strength Indication, RSSI) is measured, and a resource with large interference is excluded according to a measurement result.
(4) A subframe (subframe) is randomly selected from 20% of resources with minimum interference in a selection window to perform periodic resource reservation.

### Partial sensing in LTE SL

Partial sensing in LTE Vehicle to X (Vehicle to X, V2X) is designed mainly to save power and to support communication of Pedestrian to Vehicle (P2V), and a Pedestrian UE (PUE) supports resource selection manners in two modes. One mode is random resource selection; and the other mode is to perform partial sensing first, select a resource based on a partial sensing result, and perform semi-static resource reservation. A mode which is selected by the PUE is configured by radio resource control (Radio Resource Control, RRC). When the RRC is configured to support resource selection in two modes, the PUE determines a resource selection manner which is adopted.

Specifically, a manner in which the terminal performs partial sensing and performs resource sensing is shown in FIG. 1c.

A sensing window of the PUE is a window filled with vertical lines in a range of [n-1000, n], lengths Y and k are parameters configured by the RRC, and a value range of k may be {1, 2, 3, ..., 10}. A window filled with horizontal lines in [n+T1, n+T2] is a selection window of the PUE configured by a higher layer. The PUE senses, in the sensing window filled with vertical lines, sidelink control information (Sidelink Control Information, SCI) sent by another terminal, and speculates, according to the sensed SCI and a reservation period, a resource reservation status of the another terminal in the window filled with horizontal lines, and the PUE may exclude, according to the information, resources in the selection window that do not satisfy conditions. At least 20% (20% of the window length Y) of resources are selected from the remaining resources as a candidate resource set and reported to a Media Access Control (Media Access Control, MAC) layer, and the MAC layer randomly selects a resource from the candidate resource set as a candidate resource of the PUE. The PUE performs periodic reservation on the selected resource, and a reservation period is indicated in the SCI.

### Random selection in SL

If a user performs random selection, a resource is randomly selected in the selection window, and it is not necessary to perform sensing.

### Full sensing in NR SL

In the Mode 2, namely, resource assignment mode, the UE is supported in performing resource selection based on sensing. A principle thereof as follows:
1) A transmit terminal (TX UE) determines a resource selection window after resource selection is triggered.
2) Before resource selection, the UE needs to determine a candidate resource set (candidate resource set) for resource selection. A specific implementation method is to compare a reference signal received power (Reference Signal Received Power, RSRP) measured on a resource in the resource selection window with a corresponding RSRP threshold (threshold). If the RSRP is less than the RSRP threshold, the resource may be incorporated into the candidate resource set.
3) After the resource set is determined, the UE randomly selects a transmission resource from the candidate resource set. In addition, the UE may reserve a transmission resource for subsequent transmission in the current transmission.

In NR SL, the TX UE performs resource reservation (reservation is divided into periodic reservation and aperiodic reservation) on resources assigned by the TX UE, and a reserved resource is used for subsequent transmission of a physical sidelink control channel (Physical Sidelink Control Channel, PSCCH) and/or physical sidelink shared channel (Physical Sidelink Shared Channel, PSSCH). The aperiodic reservation may be implemented through a time resource assignment (Time resource assignment) field in the SCI, and the reserved resource may be at least used for transmission of a same transport block (Transport Blocks, TB). The periodic reservation may be implemented through a resource reservation period (Resource reservation period) field in the SCI, and a periodic resource reserved in a current period may be used for transmission of a next TB. In R16, the UE actually always performs sensing (for example, full sensing).

### Partial sensing in NR: PBPS and CPS

In NR R17, because the capability or battery capacity is limited, a power saving UE cannot continuously perform sensing (for example, full sensing) like the UE in R16, and therefore can perform only partial sensing (partial sensing) or random resource selection. The power saving UE also supports periodic partial sensing similar to that in LTE, which is referred to as periodic based partial sensing (periodic based partial sensing), that is, PBPS in NR.

In addition to performing PBPS, the UE may further need to perform contiguous sensing (which may be, for example, referred to as short terming sensing (short terming sensing) or contiguous partial sensing (contiguous partial sensing) in a period [n+TA, n+TB], where TA and TB may be positive numbers, negative numbers, or 0. As shown in FIG. 1d, a packet is incoming in a slot (slot) n, and a UE determines a selection window or a resource set or Y slots. To exclude a resource in the selection window or the resource set or the Y slots that may conflict with a reserved resource of another UE, the UE determine a CPS window and a PBPS window that correspond to the selection window or the resource set or the Y slots, and performs sensing in the CPS window and the PBPS window.

### SL resource pre-emption (Resource pre-emption) in NR SL

In the mode (Mode) 2, namely, resource assignment mode, a resource pre-emption mechanism is supported, and brief descriptions of the mechanism are as follows: A resource reserved/selected by a UE overlaps (partially overlaps) a resource reserved/selected by another UE having a higher priority service. If an SL-RSRP measurement value of the UE on an associated resource is greater than an associated (associated) SL-RSRP threshold, the UE triggers resource re-selection. The service priority and the SL-RSRP threshold are determined by TB transmission on the resource.

As shown in FIG. 1e, to determine whether a resource (PSCCH/PSSCH resource) reserved/selected by a UE is pre-empted, the UE performs resource selection re-evaluation at least at a moment 'm-T3', where a moment 'm' is a moment at which the resource is located or a moment at which resource reservation information is sent, and T3 includes at least duration in which the UE performs resource selection processing.

A method and an apparatus provided in the embodiments of this application is described in detail below with reference to the accompanying drawings by using specific embodiments and application scenarios thereof.

For ease of understanding, several terms (non-publicly known terms, only for ease of subsequent descriptions) are defined first:

### 1. Sensing occasion

In this application, sensing occasions may contain PBPS occasions and/or CPS occasions, and an occasion may be specifically a resource such as a window (window) or a slot (slot). Correspondingly, the sensing occasions may contain: PBPS windows, CPS windows, PBPS slots, and/or CPS slots. The sensing occasion may also be referred to as a sensing slot, a slot, a sensing window, a window, or the like. The various cases are all applicable to the technical solution of this application. This is not specifically limited in the embodiments of this application.

For a process (for example, a process, resource selection triggered by an incoming packet, re-evaluation and/or pre-emption evaluation), sensing slots in a PBPS window corresponding to the process are respectively referred to as PBPS slots corresponding to the process, and sensing slots in a CPS window corresponding to the process are respectively referred to as CPS slots corresponding to the process.

It is to be noted that, 'the PBPS window and/or CPS window corresponding to the process' mentioned herein may be a PBPS window and/or CPS window corresponding to PBPS and/or CPS that is assumed to be triggered, where it may be first assumed that the process triggers (trigger) PBPS and/or CPS (regardless of whether PBPS and/or CPS is actually finally triggered) and a corresponding PBPS window and/or CPS window is determined; or may be a PBPS window and/or CPS window corresponding to actually triggered PBPS and/or CPS. The statement "triggered sensing occasion" involved below may be a PBPS window and/or CPS window assumed to be triggered, or may be an actually triggered PBPS window and/or CPS window.

### 2. Existing sensing occasion (existing sensing slot, or existing PBPS slot, or existing CPS slot)

If PBPS and/or CPS is triggered for a process, a UE needs to perform sensing for this case, and the sensing slots belong to triggered PBPS and/or CPS slots. However, some sensing slots in a PBPS and/or CPS window corresponding to the process may be sensing slots of another process. In this case, the sensing slots of the another process may be defined as existing sensing slots. For example, as shown in FIG. 1f, a process 2 has an incoming packet in a slot n' and triggers sensing, and subsequently a process 1 has an incoming packet at a moment of a slot n and also triggers sensing. In this case, because the sensing triggered by the process 2 is completed, and a sensing window of the process partially overlaps a sensing window of the process 1, a result of the overlapping part may be directly used for the process 1. The sensing of the process 2 is existing sensing of the process 1. Therefore, 'existing PBPS sensing slots (for example, corresponding to the process)' mentioned below may be PBPS sensing and/or CPS sensing slots of another process, and 'existing CPS sensing slots (corresponding to the process)' may be PBPS sensing and/or CPS sensing slots of another process.

The foregoing PBPS and/or CPS slots may contain triggered PBPS slots and/or CPS slots, and may also contain existing PBPS slots and/or existing CPS slots.

In implementations of this application, all "transmission" statements may be explained as sending or receiving.

Referring to FIG. 2, an embodiment of this application provides a sensing trigger method. The method may be performed by a terminal, and includes the following specific steps:
Step 201: determining, by a terminal according to a first preset condition and/or a second preset condition, whether to determine sensing occasions and/or trigger sensing for a first process, where
the first preset condition and/or the second preset condition is associated with target sensing occasions, the target sensing occasions include first sensing occasions or the target sensing occasions include first sensing occasions and second sensing occasions, the first sensing occasions are sensing occasions corresponding to the first process, the second sensing occasions do not overlap at least part of the first sensing occasions, at least part of the second sensing occasions are sensing occasions corresponding to a second process, and the second process is a process different from the first process.

That the at least part of the second sensing occasions correspond to the second process means that the at least part of the second sensing occasions may correspond to the second process, and may also correspond to another process.

In a possible implementation, the sensing occasions include one or more of the following:
(1) PBPS occasions; and
(2) CPS occasions.

It should be noted that PBPS occasions and CPS occasions corresponding to a same process may overlap. One slot may be simultaneously in sensing occasions of a plurality of processes. One slot may be in a PBPS occasion of a process and in a CPS occasion of another process.

For example, a PBPS window and a CPS window corresponding to a same process may overlap. One slot may be simultaneously in sensing windows of a plurality of processes. One slot may be in a PBPS window of a process and in a CPS window of another process.

In this embodiment of this application, the foregoing first process may include types such as a process, resource selection triggered by an incoming packet, re-evaluation, and/or pre-emption evaluation. Similarly, the foregoing second process may also include types such as a process, resource selection triggered by an incoming packet, re-evaluation, and/or pre-emption evaluation.

In an actual application scenario, there may be such a case that the first process and the second process correspond to a same resource pool, for example, trigger sensing, resource selection, re-selection, re-evaluation, and pre-emption evaluation in the same resource pool.

The first process and the second process are unnecessarily different processes, and may be a same Hybrid Automatic Repeat reQuest (Hybrid Automatic Repeat reQuest, HARQ) process but are targeted at different TBs. For example, resource selection corresponding to TB1 of the process 1 and resource selection corresponding to TB2 of the process 1 are different resource selection processes.

The foregoing target resource may refer to: one or more of a selectable resource, an available resource, a candidate resource (candidate resource), an excluded resource, a re-evaluated (re-evaluated) resource, and a pre-empted (pre-empted) resource.

The foregoing target sensing occasions may be referred to as available sensing occasions (available sensing slots), the foregoing first sensing occasions may be referred to as the second sensing slots, and the foregoing second sensing occasions may be referred to as existing sensing (for example, PBPS and/or CPS) slots and/or sensing slots corresponding to another process. It should be noted that the foregoing named solutions are used for ease of description, and are not used as a limitation on names of specific features.

First, the definition of the foregoing existing sensing slots is described:
In an implementation, for a process, the so-called existing slot is:
(1) an existing sensing slot at least partially overlapping PBPS slots and/or CPS slots corresponding to the process (which refers to the foregoing first process, and may also be referred to as the current process or the process),
   for example, an existing sensing slot belonging to the PBPS slots corresponding to the process;
(2) a sensing slot at least partially overlapping a PBPS window and/or a CPS window corresponding to the process,
   for example, an existing sensing slot in the PBPS window corresponding to the process;
   and/or
(3) an existing sensing slot at least partially overlapping PBPS slots and/or CPS slots corresponding to another process (which may refer to the foregoing second process),
   for example, an existing sensing slot belonging to the PBPS slots corresponding to the another process; and
(4) a sensing slot at least partially overlapping a PBPS window and/or a CPS window corresponding to the another process,
for example, an existing sensing slot in the PBPS window corresponding to the another process.

In an implementation, for a process, the so-called existing sensing slot is:
(1) a sensing slot before a moment n or a moment m, where the moment n is a moment of triggering the first process, and the moment m is a time-domain unit in an available resource set (which may include, for example, a selection window, a remaining selection window, a set of Y slots (Y refers to a resource set indicated by a white box in FIG. 1d), and/or a resource set) corresponding to the first process; and
(2) a sensing slot that corresponds to another process but is not triggered by the process.

In an implementation, for a process, the so-called existing PBPS slot is:
(1) an existing sensing slot at least partially overlapping PBPS slots corresponding to the process,
   for example, an existing sensing slot belonging to the PBPS slots corresponding to the process;
(2) a sensing slot at least partially overlapping a PBPS window corresponding to the process,
   for example, an existing sensing slot in the PBPS window corresponding to the process;
   and/or
(3) an existing sensing slot at least partially overlapping PBPS slots corresponding to another process,
   for example, an existing sensing slot belonging to the PBPS slots corresponding to the another process; and
(4) a sensing slot at least partially overlapping a PBPS window corresponding to the another process,
for example, an existing sensing slot in the PBPS window corresponding to the another process.

(1) and (2) may be preferred implementations.

In an implementation, for a process, the so-called existing CPS slot is any one of the following:
(1) an existing sensing slot at least partially overlapping CPS slots corresponding to the process,
   for example, an existing sensing slot belonging to the CPS slots corresponding to the process;
(2) a sensing slot at least partially overlapping a CPS window corresponding to the process,
   for example, an existing sensing slot in the CPS window corresponding to the process;
   and/or
(3) an existing sensing slot at least partially overlapping CPS slots corresponding to another process,
   for example, an existing sensing slot belonging to the CPS slots corresponding to the another process; and
(4) a sensing slot at least partially overlapping a CPS window corresponding to the another process,
for example, an existing sensing slot in the CPS window corresponding to the another process.

(1) and (2) may be preferred implementations.

In a possible implementation, the available sensing slots contain the first sensing slots and/or the second sensing slots, the second sensing slots are sensing slots triggered by the process, and the first sensing slots are existing sensing slots and/or sensing slots corresponding to another process.

In a possible implementation, the first sensing slots are the available sensing slots, that is, the first sensing slots are equivalent to the second sensing slots plus the existing sensing slots.

In this embodiment of this application, the second sensing slots may be completely the same as, may be partially the same as, or may be different from the first sensing slots.

If the available sensing slots are equivalent to the second sensing slots, only one step of determining sensing is substantially required.

Specifically, step 1 of determining that at least Y and an assumed or triggered PBPS and/or CPS window of the process 1 need to be monitored, and step 2 of determining that all available sensing in one or more windows may be used for resource exclusion may be included.

For example,
(1) step 1 of determining Y of the process 1 and determining the second sensing + step 2 of determining the first sensing are performed, and resource exclusion is performed based on the first sensing and the second sensing;
(2) step 1 of determining Y of the process 1 and determining the second sensing + step 2 of determining the first sensing are performed, and resource exclusion is performed based on the first sensing;
(3) only step 1 is performed, that is, Y of the process 1 is determined and the second sensing is determined + resource exclusion is performed based on the second sensing; and
(4) only step 1 is performed, that is, Y of the process 1 is determined and the first sensing is determined + resource exclusion is performed based on the first sensing.

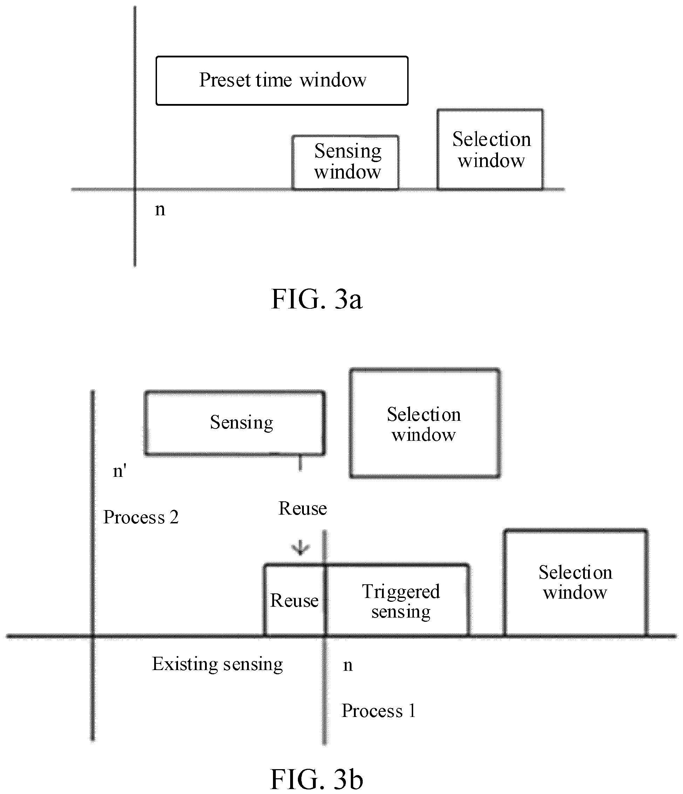

Referring to FIG. 3a, in a specific implementation,
(1) a resource selection process is triggered in a slot n.
(1.1) A UE determines a selection window, a remaining selection window, a set of Y slots, and/or a resource set.
(1.2) The UE determines a second sensing slot, where the second sensing slot is a PBPS window and/or CPS window (for example, corresponding to the process), and performs sensing in a sensing window.

An execution sequence of (1.1) and (1.2) is not restrained.

(2) The UE determines available sensing slots, where the available sensing slots are slots in a preset time window that are available for sensing.

(2.1) In an implementation, the preset time window ranges from slot n-T0 to slot n-processing time0. Optionally, the processing time is Tproc0. Optionally, T0 is a value that is configurable or pre-configured or specified by a protocol.

(2.2) In an implementation, the preset time window is related to a start point of a selection window/remaining selection window/set of Y slots/resource set, and specifically ranges from the start point-T4 to the start point-processing time1. Optionally, the processing time1 contains at least a time required for decoding SCI and/or for reporting a target resource, for example, Tproc0 + Tproc1. Optionally, T4 is a value that is configurable or pre-configured or specified by a protocol.

(3) The UE determines, based on the available sensing slots, whether a reserved resource of another UE conflicts with a resource in the selection window/remaining selection window/set of Y slots/resource set.

This application further includes a concept of triggered sensing occasions. For a process, the so-called triggered sensing occasions are:
(1) (for example, assumed or triggered) PBPS slots and/or CPS slots of the process; and
(2) at least some sensing slots of a (for example, assumed or triggered) PBPS window and/or CPS window of the process.

In some embodiments, triggered sensing occasions do not overlap existing slots. As shown in FIG. 3b, for a process 1, a reused part belongs to existing, and a non-reused part belongs to triggered sensing occasions.

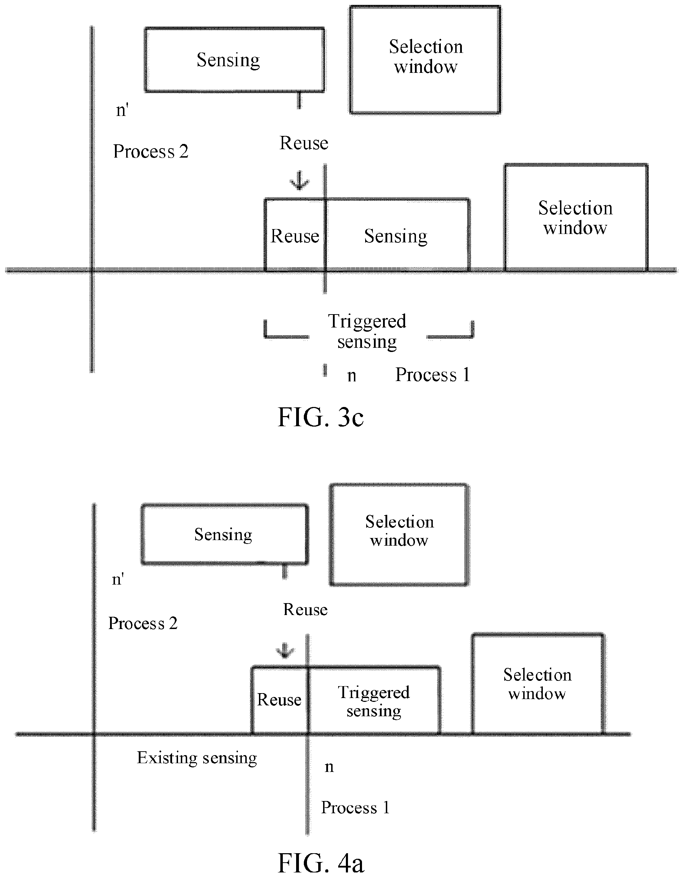

In some embodiments, triggered sensing occasions contain existing slots, for example, contain existing sensing slots and slots additionally required for performing sensing after sensing is triggered. As shown in FIG. 3c, for a process 1, reused triggered sensing occasions contain a reused part and sensing slots additionally used for performing sensing.

In a possible implementation, the first preset condition includes one or more of the following:
(1) A first condition for determining sensing occasions and/or triggering sensing, where the first condition includes one or more of the following:
   (1.1) a quantity of triggered sensing occasions is greater than or equal to a first value;
   Optionally, CPS is used as an example; in this case, a start point of a CPS window or a start point of triggered CPS slots (that is, the first slot or sensing slot, recorded as n+TA) is equal to or later than (later than may also be understood as greater than) a moment n; or TA≥0;
   (1.2) a sum of a quantity of the second sensing occasions and the quantity of the triggered sensing occasions is greater than or equal to a second value;
   Optionally, CPS is used as an example; in this case, a start point of a CPS window or a start point of triggered CPS slots (that is, the first slot or sensing slot, recorded as n+TA) is equal to or later than a moment n; or TA>0;
   Optionally, CPS is used as an example; in this case, a start point of a CPS window or a start point of triggered CPS slots (that is, the first slot or sensing slot, recorded as n+TA) is an earliest slot of existing (CPS) sensing slots and triggered (for example, CPS) sensing slots or is not later than the slot;
   CPS is used as an example, and a targeted possible scenario is, an incoming packet PDB is too small and therefore a CPS window being after a moment n and satisfying CPSmin cannot be determined, but there is existing CPS before the moment n; and it is assumed that after existing CPS is used, a CPS window satisfying CPSmin can be determined, and therefore CPS can still be triggered;
   (1.3) the quantity of the second sensing occasions is greater than or equal to a third value;
   Optionally, CPS is used as an example; in this case, a start point of a CPS window or a start point of triggered CPS slots (that is, the first slot or sensing slot, recorded as n+TA) is an earliest slot of existing (CPS) sensing slots or is not later than the slot;
   (1.4) a quantity of preset occasions is greater than or equal to a fourth value, where the preset occasion is any one of a sensing occasion, a sidelink SL occasion, an SL occasion not used for synchronous signal transmission, an occasion other than a non-monitor occasion, and an SL occasion in a resource pool; and
   (1.5) a quantity of sensing occasions determined by the terminal is greater than or equal to a fifth value;
   that is, the quantity of sensing slots in CPS windows found and/or determined by the UE is not less than the fifth value, or the quantity of sensing slots found and/or determined by the UE is not less than the fifth value;
   CPS is used as an example, the UE autonomously defines n+TA and ensures that the CPS window satisfies the solution of the min size, and how to determine a protocol is not specified.
(2) A second condition for determining a sensing occasion and/or triggering sensing, where the second condition includes:
   a quantity of preset occasions in an available resource set which is determined by the terminal is greater than or equal to a sixth value;
   that is, a quantity of resources, slots, sensing slots, SL slots, SL slots not used for synchronous signal transmission, slots other than a non-monitor occasion (non-monitor slot), and/or SL slots in a resource pool that are in a selection window, a remaining selection window, a set of Y slots, and/or a resource set found and/or determined by the UE is not less than the sixth value.
      It should be noted that the first condition and the second condition are applicable to both PBPS and CPS.
(3) At least part of first reservation period values are less than or equal to a seventh value.
(4) At least part of second reservation period values used for determining PBPS occasions are less than or equal to an eighth value.
(5) A quantity of non-overlapping parts between the determined PBPS occasions and CPS occasions is greater than or equal to a ninth value, or a proportion of the non-overlapping parts in the determined PBPS occasions is greater than or equal to a first ratio.
   The foregoing determined PBPS occasions refer to PBPS in the available resource set. The determined CPS appearing below is similar to this, and is not repeated again.
(6) A quantity of non-overlapping parts between the determined PBPS occasions and the second sensing occasions is greater than or equal to a tenth value, or a proportion of the non-overlapping parts in the determined PBPS occasions is greater than or equal to a second ratio.
(7) A quantity of overlapping parts between the determined PBPS occasions and the CPS occasions is less than or equal to an eleventh value, or a proportion of the overlapping parts in the determined PBPS occasions is less than or equal to a third ratio.
(8) A quantity of overlapping parts between the determined PBPS occasions and the second sensing occasions is less than or equal to a twelfth value, or a proportion of the overlapping parts in the determined PBPS occasions is less than or equal to a fourth ratio.
(9) At least some occasions of the determined PBPS occasions do not overlap each other, or a quantity of overlapping parts between the at least some occasions is less than a thirteenth value, or a proportion of the overlapping parts between the at least some occasions in the determined PBPS occasions is less than a fifth ratio.
(9.a) A third condition is not satisfied. Content of the third condition may include one or more of the foregoing (3) to (9), and that the third condition is not satisfied is applicable to a CPS scenario.
   It should be noted that the third condition may be understood as a condition for determining PBPS occasions and/or triggering PBPS. Correspondingly, that the third condition is not satisfied may be understood as that a condition for determining CPS occasions and/or triggering CPS is not satisfied, that is, at least one condition for determining PBPS occasions and/or triggering PBPS is not satisfied.
(10) At least part of third reservation period values are greater than or equal to a fourteenth value.
(11) At least part of fourth reservation period values used for determining PBPS occasions are greater than or equal to a fifteenth value.
(12) A quantity of non-overlapping parts between the determined CPS occasions and PBPS occasions is greater than or equal to a sixteenth value, or a proportion of the non-overlapping parts in the determined CPS occasions is greater than or equal to a sixth ratio.
(13) A quantity of non-overlapping parts between the determined CPS occasions and the second sensing occasions is greater than or equal to a seventeenth value, or a proportion of the non-overlapping parts in the determined CPS occasions is greater than or equal to a seventh ratio.
(14) A quantity of overlapping parts between the determined CPS occasions and the PBPS occasions is less than or equal to an eighteenth value, or a proportion of the overlapping parts in the determined CPS occasions is less than or equal to an eighth ratio.
(15) A quantity of overlapping parts between the determined CPS occasions and the second sensing occasions is less than or equal to a nineteenth value, or a proportion of the overlapping parts in the determined CPS occasions is less than or equal to a ninth ratio.
(16) At least some occasions of the determined CPS occasions do not overlap each other, or a quantity of overlapping parts between the at least some occasions is greater than or equal to a twentieth value, or a proportion of the overlapping parts between the at least some occasions in the determined CPS occasions is greater than or equal to a tenth ratio.
(17) The quantity of the preset occasions in the available resource set is less than or equal to i×P-processing time, where i is a positive integer, P is a fifth reservation period value or the P is a sixth reservation period value used for determining PBPS occasions, and the processing time is greater than or equal to a time required for decoding SCI and/or for preparing to report a target resource.
   To be specific, a minimum quantity of resources, slots, sensing slots, SL slots, SL slots not used for synchronous signal transmission, slots other than a non-monitor slot, and/or SL slots in a resource pool that are in a selection window, a remaining selection window, a set of Y slots, and/or a resource set (for example, corresponding to the process) is less than or equal to i×P-processing time, where P is a specific or any Preserve, and P is a specific or any reservation period value.
(17.a) A fourth condition is not satisfied. Content of the fourth condition may include one or more of the foregoing (10) to (17), and that the fourth condition is not satisfied is applicable to a PBPS scenario.
   It should be noted that the fourth condition may be understood as a condition for determining CPS occasions and/or triggering CPS. Correspondingly, that the fourth condition is not satisfied may be understood as that a condition for determining PBPS occasions and/or triggering PBPS is not satisfied, that is, at least one condition for determining CPS occasions and/or triggering CPS is not satisfied.
(18) A condition that the target sensing occasions include the second sensing occasions is satisfied.
(19) (for example, the process may be resource re-evaluation or pre-emption) no sensing occasion exists in a preset period, or a quantity of sensing occasions is less than a preset value in a preset period, or there is no sensing occasion corresponding to the first process in a preset period.

Optionally, the foregoing sensing occasions are sensing slots corresponding to another process or existing slots.

Optionally, this is applicable to CPS

In a possible implementation, in a case that some conditions are satisfied, target sensing occasions include second sensing occasions. To be specific, when the first preset condition is satisfied, available sensing slots contain existing sensing (for example, PBPS and/or CPS) slots and/or sensing slots (for example, PBPS slots and/or CPS slots) corresponding to another process, that is, the foregoing (3), (6), and (7); or existing sensing slots and/or sensing slots corresponding to another process that satisfy some conditions may be used as the available sensing slots.

The foregoing (18) satisfies the condition that the target sensing occasions include the second sensing occasions, or the second sensing occasions satisfying a specific condition can be used for the target sensing occasions, and the condition includes one or more of the following:
(18.1) The second sensing occasions are in a preset time range, where the preset time range is any one of a preset time, a preset time window, and a preset timer.

In this case, it may alternatively be explained that existing sensing slots and/or sensing slots corresponding to another process that satisfy the condition that the target sensing occasions include preset occasions in the preset time range may be used as the available sensing slots.

(18.2) A distance between the second sensing occasion and a moment n is greater than or equal to the processing time, where the moment n is a moment of triggering the first process.

(18.3) The distance between the second sensing occasion and the moment n is greater than or equal to the processing time.

(18.4) The second sensing occasions are in a Kth PBPS occasion (for example, corresponding to one or more period values), where K is a positive integer.

Optionally, there may be one or more values for K, that is, there are a plurality of windows, and K may be configured/pre-configured/specified by a protocol/indicated by a higher layer/determined by the UE.

Optionally, the foregoing period value may be configured, pre-configured, specified by a protocol, indicated by a higher layer and/or determined by the UE.

For example, if the foregoing period value is configured and/or pre-configured, the UE needs to perform sensing in latest and/or ultimate PBPS slots and penultimate PBPS slots. If the existing slots belong to latest and/or antepenultimate PBPS slots of the process for the process, the existing slots are not available. If the existing slots belong to latest and/or ultimate PBPS slots and penultimate PBPS slots for the process, the existing slots are available.

(18.5) A quantity of overlapping parts between the second sensing occasions and the first sensing occasions is less than or equal to a first threshold, or the quantity of the overlapping parts is greater than or equal to a second threshold, or a proportion of the overlapping parts in the first sensing occasions is less than or equal to an eleventh ratio, or the proportion of the overlapping parts in the first sensing occasions is greater than or equal to a twelfth ratio.

(18.6) A quantity of non-overlapping parts between the first sensing occasions and the second sensing occasions is less than or equal to a third threshold, or the quantity of the non-overlapping parts is greater than or equal to a fourth threshold, or a proportion of the non-overlapping parts in the first sensing occasions is less than or equal to a thirteenth ratio, or the proportion of the non-overlapping parts in the first sensing occasions is greater than or equal to a fourteenth ratio.

(18.7) An available resource set corresponding to the second sensing occasions at least partially overlaps an available resource set corresponding to the first sensing occasions.

(18.8) A quantity of resources of an overlapping part between the available resource set corresponding to the second sensing occasions and the available resource set corresponding to the first sensing occasions is less than or equal to a fifth threshold, or the quantity of the resources of the overlapping part is greater than or equal to a sixth threshold, or a proportion of the quantity of the resources of the overlapping part in the available resource set corresponding to the second sensing occasions or the available resource set corresponding to the first sensing occasions is less than or equal to a fifteenth ratio, or the proportion of the overlapping part in the available resource set corresponding to the second sensing occasion or the available resource set corresponding to the first sensing occasions is greater than or equal to a sixteenth ratio.

(18.9) A condition implemented by the terminal, that is, determined and/or implemented autonomously by the terminal.

In a possible implementation, the method further includes: skipping, by the terminal in a case that the second preset condition is satisfied, determining a sensing occasion and/or triggering sensing, where
the second preset condition includes one or more of the following:
(1) one or more items of the first preset condition are not satisfied;
(2) at least some sensing occasions are contiguous, and a quantity of the sensing occasions or a quantity of the contiguous sensing occasions exceeds a seventh threshold; and
(3) the quantity of the preset occasions in the available resource set is less than or equal to j×P-processing time, where j is a positive integer, P is a seventh reservation period value or the P is an eighth reservation period value used for determining PBPS occasions, and the processing time is greater than or equal to a time required for decoding SCI and/or for preparing to report a target resource.

To be specific, a minimum quantity of resources, slots/sensing slots, SL slots, SL slots not used for synchronous signal transmission, slots other than a non-monitor slot, and/or SL slots in a resource pool that are in a selection window, a remaining selection window, a set of Y slots, and/or a resource set (for example, corresponding to the process) is less than or equal to j ×P-processing time, where P is a specific or any Preserve, and P is a specific or any reservation period value. The minimum quantity of resources, slots/sensing slots, SL slots, SL slots not used for synchronous signal transmission, slots other than a non-monitor slot, and/or SL slots in the resource pool that are in the selection window, the remaining selection window, the set of Y slots, and/or the resource set is greater than or equal to j×P.

In some implementations, the UE does not expect that one or more of the following appear:
(1) Latest Kth sensing occasions corresponding to at least two resources in an available resource set correspond to different period coefficient values. For example, a latest first PBPS occasion corresponding to a resource y1 is y-P*1, a latest first PBPS occasion corresponding to a resource y2 is y-P*2, and 1 and 2 are period coefficient values.
(2) At least part of ninth reservation period values are less than or equal to a twentieth value.
(3) At least part of tenth reservation period values used for determining PBPS occasions are less than or equal to a twenty-first value.
(4) The quantity of the preset occasions in the available resource set is less than or equal to l×P-processing time, where l is a positive integer, P is an eleventh reservation period value or the P is a twelfth reservation period value used for determining PBPS occasions.
(5) At least some sensing occasions are contiguous, and a quantity of the sensing occasions or a quantity of the contiguous sensing occasions exceeds an eighth threshold.
(6) A quantity of overlapping parts between the PBPS occasions and CPS occasions is greater than or equal to a twenty-second value, or a proportion of the overlapping parts in the sensing occasions is greater than or equal to a seventeenth ratio.
(7) At least some occasions of the determined PBPS occasions overlap each other, or a quantity of overlapping parts between the at least some occasions is greater than or equal to a twenty-third value, or a proportion of the overlapping parts between the at least some occasions in the determined PBPS occasions is greater than or equal to an eighteenth ratio.

In some implementations, the UE expects that at least one or more of the following are satisfied:
(1) Latest Kth sensing occasions corresponding to resources in an available resource set correspond to different coefficient values.
(2) At least part of thirteenth reservation period values are greater than or equal to a twenty-fourth value.
(3) At least part of fourteenth reservation period values used for determining PBPS occasions are greater than or equal to a twenty-fifth value.
(4) The quantity of the preset occasions in the available resource set is greater than or equal to m×P-the processing time, where m is a positive integer, P is a fifteenth reservation period value or the P is a sixteenth reservation period value used for determining PBPS occasions.
(5) At least some sensing occasions are contiguous, and a quantity of the sensing occasions or a quantity of the contiguous sensing occasions exceeds a ninth threshold.
(6) A quantity of overlapping parts between the PBPS occasions and CPS occasions is less than or equal to a twenty-sixth value, or a proportion of the overlapping parts in the sensing occasions is less than or equal to a nineteenth ratio.
(7) At least some occasions of the determined PBPS occasions overlap each other, or a quantity of overlapping parts between the at least some occasions is less than or equal to a twenty-seventh value, or a proportion of the overlapping parts between the at least some occasions in the determined PBPS occasions is less than or equal to a twentieth ratio.

It should be noted that the Nth values involved in the foregoing conditions may be the same as each other or may be different from each other, and may be set based on actual requirements, and other Nth proportions and Nth thresholds are similar to those involved in the foregoing conditions, and are not repeated again.

In a possible implementation, for the first condition and/or the second condition for determining sensing occasions and/or triggering sensing, the first value, the second value, the third value, the fourth value, the fifth value and/or the sixth value is a first preset value or a product of the first preset value and an adjustment coefficient (for example, denoted as α).

The foregoing adjustment coefficient α plays a role in performing specific adjustment on the corresponding first value to sixth value according to actual requirements, to cause the values to better conform to actual use requirements. That the quantity of triggered sensing occasions is greater than or equal to the first value is used as an example. It is assumed that the first value is 5, that is, 5 triggered sensing occasions (which may be specifically triggered sensing slots). However, in consideration of an actual requirement, for example, the UE requires some time for processing or some sensing slots may be actually not available, α may be set to a value such as 1.2 or 1.3. In this way, in a case that the first condition is satisfied, the case corresponds to sensing occasions whose quantity is slightly greater than 5.

Optionally, the adjustment coefficient (for example, denoted as α) corresponding to the foregoing first value to fifth value may be different from an adjustment coefficient (for example, denoted as β) corresponding to the sixth value; and
the first preset value includes any one of the following:
(1) a minimum quantity of sensing occasions; optionally, this is preferably applicable to the first value to fifth value; and
   it may be understood that CPS is triggered only when the quantity of CPS windows or CPS sensing slots is not less than CPSmin;
(2) a minimum resource quantity of an available resource set; for example, it is understood as a minimum selection window length RSWmin, a minimum remaining selection window length RRSWmin, a minimum value Ymin of Y, or a minimum value of the quantity of resources contained in a resource set; optionally, this is preferably applicable to the sixth value;
(3) duration of the processing time;
(4) a weighted sum of the minimum quantity of sensing occasions and the minimum resource quantity of the available resource set; that is, a weighted sum of (1) and (2);
(5) a weighted sum of the minimum quantity of sensing occasions, the minimum resource quantity of the available resource set, and the duration of the processing time; that is, a weighted sum of (1), (2), and (3); and
(6) a weighted sum of the minimum quantity of sensing occasions and the duration of the processing time; that is, a weighted sum of (1) and (3);

In a possible implementation, a quantity of sensing occasions, prediction occasions, PBPS occasions, and/or CPS occasions in the first condition, and/or a quantity of sensing occasions, preset occasions, PBPS occasions, and/or CPS occasions in the second condition is a quantity of sensing occasions, preset occasions, PBPS occasions, and/or CPS occasions in a first period.

Specifically, the first condition includes one or more of the following:
(1) a quantity of triggered sensing occasions in the first period is greater than or equal to a first value;
(2) a sum of a quantity of second sensing occasions and a quantity of triggered sensing occasions in the second period is greater than or equal to a second value;
(3) a quantity of second sensing occasions in the third period is greater than or equal to a third value;
(4) a quantity of preset occasions in the fourth period is greater than or equal to a fourth value, where the preset occasion is any one of a sensing occasion, a sidelink SL occasion, an SL occasion not used for synchronous signal transmission, an occasion other than a non-monitor occasion, and an SL occasion in a resource pool; and
(5) a quantity of sensing occasions that are in the fifth period and that are determined by the terminal is greater than or equal to a fifth value.

The second condition includes:
a quantity of preset occasions in an available resource set determined by the terminal in the sixth period is greater than or equal to a sixth value.

To be specific, the foregoing first period refers to a time range added for the quantity of sensing occasions, prediction occasions, PBPS occasions, and/or CPS occasions in the first condition and/or the second condition. That is to say, in the first period, if the foregoing quantity of sensing occasions, prediction occasions, PBPS occasions, and/or CPS occasions satisfies a corresponding value, it is considered that the first condition and/or the second condition is satisfied.

The first period includes one or more of the following:
(1) at least part between a first moment and a second moment, or at least part of time between a moment 1 and a moment 2 contained in the first period and/or the second period, where
   the first moment is a moment n, or the moment n plus a first preset offset, or the moment n minus a second preset offset, the moment n is a moment of triggering the first process, the second moment is a start point of an available resource set, or the start point of the available resource set plus a third preset offset, or the start point of the available resource set minus a fourth preset offset, or a first time-domain unit in the available resource set, or the first time-domain unit in the available resource set plus a fifth preset offset, or the first time-domain unit in the available resource set plus a sixth preset offset; and
(2) a preset time range, where the preset time range is any one of a preset time, a preset time window, and a preset timer.

For example, the first period ranges from the start point slot of the selection window-1000 slot to the start point of the selection window-processing time.

In another example, the first period ranges from the start point slot of the set of Y slots-1000 slot to the start point of the set of Y slots-processing time.

The foregoing Nth preset offset contains at least a time required for decoding SCI and/or for preparing to report a target resource.

In a possible implementation, for example, for triggered sensing occasions, the first condition and/or the second condition may further include one or more of the following, or 'the quantity of sensing slots in found and/or determined CPS windows is greater than or equal to the first value, or the quantity of (for example, CPS) sensing slots found and/or determined by the UE is not less than the first value' may specifically mean that the CPS windows or (for example, CPS) sensing slots that can be found and/or determined satisfy one or more of the following:
(1) A quantity of determined and/or triggered sensing occasions of the sensing occasions is greater than or equal to an eighth threshold, or the quantity of the triggered sensing occasions is less than or equal to a ninth threshold, or a proportion of the triggered sensing occasions in the CPS occasions is greater than or equal to a thirteenth ratio, or the proportion is less than or equal to a fourteenth ratio.
   For example, triggered sensing slots in FIG. 4a is not less than 60% of CPSmin.
(2) A quantity of the second sensing occasions of the sensing occasions is greater than or equal to a tenth threshold, or the quantity of the second sensing occasions is less than or equal to an eleventh threshold, or a proportion of the second sensing occasions in the sensing occasions is greater than or equal to a fifteenth ratio, or the proportion of the second sensing occasions in the sensing occasions is less than or equal to a sixteenth ratio.
   For example, existing sensing slots in FIG. 4a is not greater than 20% of CPSmin.
(3) A quantity of non-monitor occasions of the sensing occasions is greater than or equal to an eleventh threshold, or the quantity of the non-monitor occasions is less than or equal to a twelfth threshold, or a proportion of the non-monitor occasions in the sensing occasions is greater than or equal to a seventeenth ratio, or the proportion of the non-monitor occasions in the sensing occasions is less than or equal to an eighteenth ratio.
(4) A quantity of first occasions of the sensing occasions is greater than or equal to a twelfth threshold, or the quantity of the first occasions is less than or equal to a thirteenth threshold, or a proportion of the first occasions in the sensing occasions is greater than or equal to a nineteenth ratio, or the proportion of the first occasions in the sensing occasions is less than or equal to a twentieth ratio, and the first occasions are occasions in a resource pool corresponding to the first process.
(5) A quantity of second occasions of the sensing occasions is greater than or equal to a fourteenth threshold, or the quantity of the second occasions is less than or equal to a fifteenth threshold, or a proportion of the second occasions in the sensing occasions is greater than or equal to a twenty-first ratio, or the proportion of the second occasions in the sensing occasions is less than or equal to a twenty-second ratio, and the second occasion is an occasion used for receiving and/or sensing.
(6) A start point of the sensing occasions is less than (or earlier than) or equal to a start point of a preset time range, where the preset time range is any one of a preset time, a preset time window, and a preset timer.
(7) An end point of the sensing occasions is greater than (or later than) or equal to a second moment, the second moment is a start point of an available resource set, or the start point of the available resource set plus a third preset offset, or the start point of the available resource set minus a fourth preset offset, or a first resource in the available resource set plus a fifth preset offset, or the first resource in the available resource set plus a sixth preset offset.

In some possible implementations, the first condition and/or the second condition may be determined at a time according to a specific sequence, which is specifically as follows:
Solution 1: In a case that the terminal determines that the first condition is satisfied (optionally, it may be assumed that only the first condition is considered in this case), the determining, by the terminal, the sensing occasions and/or triggering, by the terminal, sensing for the first process includes one or more of the following:
   (1) The terminal determines the available resource set.
      In this case, the terminal does not care about whether being not less than a minimum constraint on a selection window, a remaining selection window, a set of Y slots, and/or a resource set is satisfied, that is, a quantity of resources, slots, sensing slots, SL slots, SL slots not used for synchronous signal transmission, slots other than a non-monitor slot, and/or SL slots in a resource pool that are in the determined selection window, remaining selection window, set of Y slots, and/or resource set may be less than the minimum constraint.
   (2) The terminal determines the sensing occasions and/or the terminal triggers sensing.
   (3) The terminal determines a target resource.
      In a case that the terminal determines that the first condition is not satisfied, the method further includes one or more of the following:
      (1) The terminal performs random resource selection; and
      (2) Not trigger sensing and/or cancel sensing.
Solution 2: In a case that the terminal determines that the second condition is satisfied (optionally, it may be assumed that only the second condition is considered in this case), the determining, by the terminal, the sensing occasions and/or triggering, by the terminal, sensing for the first process includes one or more of the following:
   (1) The terminal determines the sensing occasions and/or the terminal triggers sensing.
   (2) The terminal determines a target resource.
      In a case that the terminal determines that the second condition is not satisfied, the method further includes:
      (1) The terminal determines the available resource set.
         In this case, the quantity of resources, slots, sensing slots, SL slots, SL slots not used for synchronous signal transmission, slots other than a non-monitor slot, and/or SL slots in the resource pool that are in the minimum determined selection window, remaining selection window, set of Y slots, and/or resource set is less than the minimum constraint.
      (2) The terminal determines the sensing occasions and/or the terminal triggers sensing.
      (3) The terminal determines a target resource.
Solution 3: In a case that the terminal first determines that the first condition is satisfied and then determines that the second condition is satisfied, or in a case that the terminal first determines that the first condition is satisfied and then determines that the second condition is not satisfied (optionally, assuming that it is necessary to consider whether the first condition and the second condition are satisfied, it is necessary to specify a determining sequence of the two conditions; assuming that the first condition is first determined and then the second condition is determined, the second condition and the first condition are satisfied, or the first condition is satisfied but the second condition is not satisfied), the determining, by the terminal, the sensing occasions and/or triggering, by the terminal, sensing for the first process includes one or more of the following:
   (1) The terminal determines the available resource set.
      In this case, the quantity of resources, slots, sensing slots, SL slots, SL slots not used for synchronous signal transmission, slots other than a non-monitor slot, and/or SL slots in the resource pool that are in the minimum determined selection window, remaining selection window, set of Y slots, and/or resource set is less than the minimum constraint.
   (2) The terminal determines the sensing occasions and/or the terminal triggers sensing.
   (3) The terminal determines a target resource.
      It should be noted that if it is determined according to the sequence that the first condition is not satisfied, this case may be equivalent to the case in the solution 1 that the first condition is not satisfied. In this way, execution may be performed directly according to corresponding operations in the solution 1.
Solution 4: In a case that the terminal first determines that the first condition is satisfied and then determines that the second condition is satisfied (optionally, assuming that it is necessary to consider whether the first condition and the second condition are satisfied, it is necessary to specify a determining sequence of the two conditions; assuming that the second condition is first determined and then the first condition is determined, the second condition and the first condition are satisfied), the determining, by the terminal, the sensing occasions and/or triggering, by the terminal, sensing for the first process includes one or more of the following:
   (1) The terminal determines the available resource set.
   (2) The terminal determines the sensing occasions and/or the terminal triggers sensing.
   (3) The terminal determines a target resource.
      In a case that the terminal first determines that the second condition is satisfied and then determines that the first condition is not satisfied (optionally, assuming that it is necessary to consider whether the first condition and the second condition are satisfied, it is necessary to specify a determining sequence of the two conditions; assuming that the first condition is first determined and then the second condition is determined, the second condition is satisfied and the first condition is not satisfied), the determining, by the terminal, the sensing occasions and/or triggering, by the terminal, sensing for the first process includes one or more of the following:
      (1) The terminal determines the sensing occasions and/or the terminal triggers sensing.
      (2) The terminal determines a target resource.

This is a processing manner 1 in a case that the second condition is satisfied and the first condition is not satisfied.

Alternatively, in a case that the terminal first determines that the second condition is satisfied and then determines that the first condition is not satisfied (optionally, assuming that it is necessary to consider whether the first condition and the second condition are satisfied, it is necessary to specify a determining sequence of the two conditions; assuming that the first condition is first determined and then the second condition is determined, the second condition is satisfied and the first condition is not satisfied), the method further includes:
(1) The terminal performs random resource selection; and
(2) not trigger sensing and/or cancel sensing.

This is a processing manner 2 in a case that the second condition is satisfied and the first condition is not satisfied.

It should be noted that if it is determined according to the sequence that the second condition is not satisfied, this case may be equivalent to the case in the solution 2 that the second condition is not satisfied. In this way, execution may be performed directly according to corresponding operations in the solution 2.

In a possible implementation, the first value, the second value, the third value, the fourth value, and/or the fifth value is obtained in a preset manner, and the preset manner is pre-configured, specified by a protocol, indicated by another terminal, and/or indicated by a higher layer, and therefore that the first condition is satisfied includes:
(1) The terminal can satisfy the first condition in a case that the first value, the second value, the third value, the fourth value, and/or the fifth value is obtained in the preset manner. To be specific, on the premise that the first value to the fifth value in the first condition are obtained in the preset manner, if the terminal can still satisfy the conditions corresponding to the values, it is considered that the first condition is satisfied.
(2) the terminal does not satisfy the first condition in a case that the first value, the second value, the third value, the fourth value, and/or the fifth value is obtained in the preset manner, and the terminal determines that the first value, the second value, the third value, the fourth value, and/or the fifth value is 0. To be specific, on the premise that the first value to the fifth value in the first condition are obtained in the preset manner, when the terminal cannot satisfy the conditions corresponding to the values, the values are directly set to 0. In this way, it can be ensured that the conditions corresponding to the values are satisfied, that is, it is considered that the first condition is satisfied.

For example, if the UE may find a CPS window satisfying CPSmin (for example, the quantity of slots between n and PDB > CPSmin+Ymin), the CPS window determined by the UE needs to satisfy CPSmin. In this case, CPSmin is a value implemented by a higher layer.

For example, if the UE cannot satisfy CPSmin (for example, the quantity of slots between n and PDB < CPSmin, and there are no existing sensing results before the slot n) in any case, and L1 considers that CPSmin=0 in this case, CPS is triggered according to the foregoing procedure, and resource exclusion is performed using available CPS.

In a possible implementation, for example, in the foregoing case that the first condition is not satisfied, the method may further include one or more of the following:
(1) The terminal reports the available resource set.

Optionally, the behaviors of the (1) are performed when the CPS window or the CPS slots are 0.

Optionally, the behaviors of the (1) are performed when the CPS window or the CPS slots are less than the corresponding minimum quantity constraint, for example, CPSmin.

(2) The terminal determines sensing occasions and/or triggering sensing, and determines a target resource according to the determined sensing occasions and/or the triggered sensing.

Optionally, the behaviors of the (2) are performed when the CPS window or the CPS slots are less than the corresponding minimum quantity constraint, for example, CPSmin.

Optionally, CPSmin=20 slots, but the UE can only find a CPS window whose length is 10 slots, and the UE can still trigger CPS and perform resource exclusion based on the CPS window of 10 slots.

In a possible implementation, the method further includes:
reporting and/or selecting, by the terminal, resources corresponding to sensing occasions.

For example, the terminal reports only resources corresponding to sensing occasions.
1) For example, that the terminal reports resources further includes at least one of the following: Optionally, the terminal indicates, through first indication information, reported resources which have corresponding sensing occasions.
2) Optionally, weights and/or priorities of the resources corresponding to the sensing occasions are increased.

For example, if the terminal knows resources which correspond to the sensing occasions, the terminal preferentially selects at least part of the resources. For example, weights and/or priorities of the resources corresponding to the sensing occasions are increased.

It should be noted that the foregoing solution has no restraint on a sequence of determining a sensing window or triggering sensing and determining a selection window, a remaining selection window, a set of Y slots, and/or a resource set (for example, corresponding to the process). This is not restrained in this embodiment of this application.

Optionally, the UE preferentially reports and/or selects the resources, and indicates that the resources have corresponding sensing windows and/or sensing slots, for example, in a manner of increasing weights or priorities of the resources.

Optionally, the sensing occasions include CPS occasions, that is, the resources at least have corresponding CPS slots and/or CPS windows;
or the sensing occasions include PBPS occasions and CPS occasions, that is, the resources have corresponding CPS slots and/or CPS windows, and PBPS slots and/or PBPS windows.

Optionally, the foregoing sensing occasions corresponding to the resources may be at least part of the sensing occasions determined and/or at least part of the sensing triggered by the terminal for the first process according to the first preset condition and/or the second preset condition, or may be existing sensing windows and/or existing sensing slots.

The following describes some scenarios of this application with reference to specific embodiments:
Application sequence of the first condition and the second condition:

### Example 1. Only one condition is introduced.

Assuming that the condition is a minimum resource quantity of the available resource set, for example, Ymin, a minimum value of a remaining selection window size (remaining resource selection window min, RRSW-min), and/or a minimum value of a selection window size (resource selection window min, RSW-min), that is, the second condition, if the condition is satisfied, the UE performs one or more of the following:
(1) Trigger CPS.
(2) Perform exclusion and determine a resource based on sensing.

Assuming that the condition is CPSmin, that is, the first condition, if the condition is satisfied, the UE performs the following:
The UE autonomously determines a set of Y slots, an RRSW, and/or an RSW.

Assuming that the condition is Ymin, RRSWmin, and/or RSWmin, that is, the second condition, if the condition is not satisfied, the UE performs one or more of the following:
(1) Trigger CPS.
(2) Perform exclusion and determine a resource based on sensing.

Assuming that the condition is CPSmin, that is, the first condition, if the condition is not satisfied, the UE performs one or more of the following:
(1) Perform random selection.
(2) not trigger CPS and/or cancel CPS.

### Example 2. Two conditions are introduced.

Case 1. Whether Ymin, RRSWmin, and/or RSWmin, that is, the second condition is satisfied is first determined, and then CPSmin, that is, the first condition is considered.

If Ymin, RRSWmin, and/or RSWmin is satisfied but CPSmin cannot be satisfied, the UE performs one or more of the following:
(1) Trigger CPS and/or perform exclusion and determine a resource based on CPS.
(2) Perform random selection.

Specifically, in a case that CPSmin cannot be satisfied:
1) if the determined 0<CPS window or CPS slots<CPSmin,
   CPS is triggered and/or exclusion is performed and a resource is determined based on CPS.
2) if the determined CPS window or CPS slots = 0 slots,

in an implementation direction 1, the UE performs random selection: specifically, the UE may perform random selection on a resource in the set of Y slots/RRSW/RSW; and
in an implementation direction 2, the UE performs the following:
   i. reporting the resource in the Ymin, RRSWmin, and/or RSWmin, and or skipping/not performing resource exclusion; or
   ii. performing resource exclusion based on the CPS window or CPS slots, where no resource may be excluded because of 0 slots.

Therefore, in the implementation 2, a processing manner in a case that CPS window or CPS slots = 0 slots is the same as that in a case that 0<CPS window or CPS slots<CPSmin.

More specifically, in an embodiment,
if the UE may find a CPS window satisfying CPSmin (for example, the moment n and PDB > CPSmin+Ymin), the UE determines a CPS window satisfying CPSmin and/or triggers CPS.

If the UE cannot find a CPS window satisfying CPSmin (for example, the quantity of slots between n and PDB < CPSmin, and there are no existing sensing results before the slot n) in any case, the UE triggers CPS, and performs implementation in the implementation direction 2.

More specifically, in an embodiment,
the UE needs to find a CPS window or CPS slots satisfying CPSmin.

CPSmin is a value configured by a higher layer. If the UE may find a corresponding CPS window satisfying the CPSmin value (for example, the moment n and PDB > CPSmin+Ymin), the UE determines a CPS window satisfying CPSmin and/or triggers CPS.

If the UE cannot find it in any case, the UE sets CPSmin=0, and therefore the UE may determine a CPS window satisfying CPSmin and/or trigger CPS.

Case 2. Whether CPSmin is satisfied is first determined, and then Ymin, RRSWmin, and/or RSWmin is considered (the sequence has an advantage of saving power).

If CPSmin is satisfied but Ymin, RRSWmin, and/or RSWmin cannot be satisfied, the UE performs one or more of the following:
(1) Trigger CPS.
(2) Perform exclusion and determine a resource based on CPS.

More specifically, in an embodiment,
if the UE can find a selection window/remaining selection window/set of Y slots/resource set (for example, moment n and PDB > CPSmin+Ymin) satisfying Ymin, RRSWmin, and/or RSWmin, the UE determines the selection window/remaining selection window/set of Y slots/resource set satisfying Ymin, RRSWmin, and/or RSWmin and/or triggers CPS.

If the UE cannot find a selection window/remaining selection window/set of Y slots/resource set satisfying Ymin, RRSWmin, and/or RSWmin (for example, the quantity of slots between n and PDB < CPSmin, and there are no existing sensing results before the slot n) in any case, the UE triggers CPS, and performs exclusion and determines a resource based on CPS.

More specifically, in an embodiment,
the UE needs to find a selection window/remaining selection window/set of Y slots/resource set satisfying Ymin, RRSWmin, and/or RSWmin.

Ymin, RRSWmin, and/or RSWmin is a value configured by a higher layer. If the UE can find a selection window/remaining selection window/set of Y slots/resource set (for example, moment n and PDB > CPSmin+Ymin) satisfying Ymin, RRSWmin, and/or RSWmin, the UE determines the selection window/remaining selection window/set of Y slots/resource set satisfying Ymin, RRSWmin, and/or RSWmin and/or triggers CPS.

If the UE cannot find it in any case, the UE sets Ymin, RRSWmin, and/or RSWmin=0, and therefore the UE can determine a selection window/remaining selection window/set of Y slots/resource set satisfying Ymin, RRSWmin, and/or RSWmin and/or triggers CPS.

For a re-evaluation and pre-emption process, a condition for triggering sensing is as follows:
First, optionally, a start point or an end point of the specific time is a moment n or a moment m.
Second, optionally, a start point or an end point of the specific time is i+offset or i-offset.
   1. Optionally, (when the process is a re-evaluation/pre-emption process), the end point of the specific time is the moment n or the moment n+offset or the moment n-offset.
      a) Optionally, the offset is the processing time.
   2. Optionally, (when the process is a re-evaluation/pre-emption process), the start point of the specific time is the moment n' or n'+offset or n'-offset.
      a) n' is a trigger moment of a resource selection/re-selection process corresponding to the process, or a time-domain unit in a selection window/remaining selection window/set of Y slots/resource set of a resource selection/re-selection process corresponding to the process, for example, the first slot/the first ms, or a moment of reporting a selection window/remaining selection window/set of Y slots/resource set of a resource selection/re-selection process corresponding to the process.

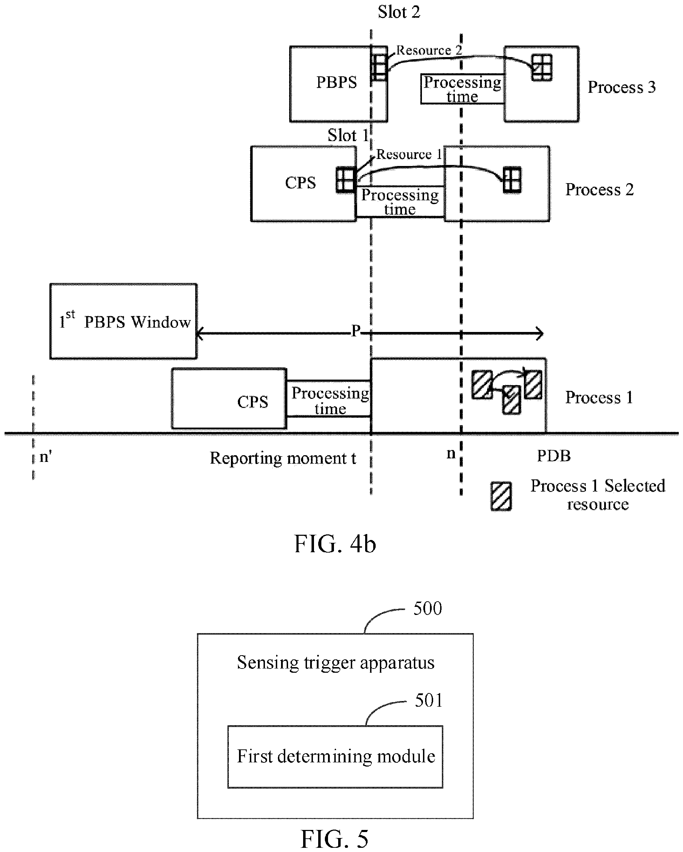

Referring to FIG. 4b, a resource selection process 1 is triggered at a moment n', and the UE performs CPS and PBPS, determines a target resource, and reports the target resource at a moment t; and a corresponding resource re-evaluation or pre-emption evaluation process is triggered at a moment n, and there is sensing of another process between t-processing time and n. For example, a sensing slot 1 and a sensing slot 2 in FIG. 4b are respectively slots of sensing windows of a process 2 and a process 3 triggered, and the UE may perform resource re-evaluation or pre-emption evaluation for the process 1 using the sensing slot 1 and the sensing slot 2. It can be seen that one resource is reserved for each of a resource 1 in the sensing slot 1 and a resource 2 in the sensing slot 2 in the figure, and the reserved resources overlap two resources selected in the process 1, so that it may be necessary to exclude the two overlapping resources.

Optionally, if the quantity of existing sensing slots or sensing slots of another process in the specific time is large, for example, greater than 32, it may not be necessary to trigger CPS sensing.

In some implementations, if PBPS is executed or triggered for a process, behaviors of the UE contain at least one of the following:
1. The UE determines an RSW and/or a set of Y slots, where Y≥Ymin.
2. The UE performs sensing in a PBPS window or PBPS occasion corresponding to this set of Y slots.
3. Perform initialization based on resources in this set of Y slots to obtain an initial available resource set SA.

In some implementations, if CPS is executed or triggered for a process, behaviors of the UE contain at least one of the following:
1. The UE determines an RSW and/or a set of Y' slots. Further, optionally, Y'≥Ymin'.
   a) If PBPS is also executed or triggered for this process, an implementation method is Y'=Y, and or Ymin'=Ymin; otherwise, Ymin is configured by a base station, is (pre-)configured, is a value indicated by a higher layer, and/or is a value indicated by another UE. Y' is a resource quantity or a preset occasion quantity of the available resource set corresponding to CPS. Y'min is a minimum value of the resource quantity or the preset occasion quantity of the available resource set corresponding to CPS. Y is a resource quantity or a preset occasion quantity of the available resource set corresponding to PBPS. Ymin is a minimum value of the resource quantity or the preset occasion quantity of the available resource set corresponding to PBPS.
2. The UE performs sensing in a CPS window or CPS occasion corresponding to this set of Y' slots.
3. Perform initialization based on resources in this set of Y' slots to obtain an initial available resource set SA.

Referring to FIG. 5, an embodiment of this application provides a sensing trigger apparatus 500, and the apparatus includes:
a first determining module 501, configured for a terminal to determine, according to a first preset condition and/or a second preset condition, whether to determine sensing occasions and/or trigger sensing for a first process, where
the first preset condition and/or the second preset condition is associated with target sensing occasions, the target sensing occasions include first sensing occasions or the target sensing occasions include first sensing occasions and second sensing occasions, the first sensing occasions are sensing occasions corresponding to the first process, the second sensing occasions do not overlap at least part of the first sensing occasions, at least part of the second sensing occasions are sensing occasions corresponding to a second process, and the second process is a process different from the first process.

In a possible implementation, the sensing occasions include one or more of the following:
periodic based partial sensing PBPS occasions; and
contiguous partial sensing CPS occasions.

In a possible implementation, the first preset condition includes one or more of the following:
a first condition for determining sensing occasions and/or triggering sensing, where the first condition includes one or more of the following:
a quantity of triggered sensing occasions is greater than or equal to a first value;
a sum of a quantity of the second sensing occasions and the quantity of the triggered sensing occasions is greater than or equal to a second value;
the quantity of the second sensing occasions is greater than or equal to a third value;
a quantity of preset occasions is greater than or equal to a fourth value, where the preset occasion is any one of a sensing occasion, a sidelink SL occasion, an SL occasion not used for synchronous signal transmission, an occasion other than a non-monitor occasion, and an SL occasion in a resource pool; and
a quantity of sensing occasions determined by the terminal is greater than or equal to a fifth value; and
a second condition for determining a sensing occasion and/or triggering sensing, where the second condition includes:
   a quantity of preset occasions in an available resource set which is determined by the terminal is greater than or equal to a sixth value;
   at least part of first reservation period values are less than or equal to a seventh value;
   at least part of second reservation period values used for determining PBPS occasions are less than or equal to an eighth value;
   a quantity of non-overlapping parts between the determined PBPS occasions and CPS occasions is greater than or equal to a ninth value, or a proportion of the non-overlapping parts in the determined PBPS occasions is greater than or equal to a first ratio;
   a quantity of non-overlapping parts between the determined PBPS occasions and the second sensing occasions is greater than or equal to a tenth value, or a proportion of the non-overlapping parts in the determined PBPS occasions is greater than or equal to a second ratio;
   a quantity of overlapping parts between the determined PBPS occasions and the CPS occasions is less than or equal to an eleventh value, or a proportion of the overlapping parts in the determined PBPS occasions is less than or equal to a third ratio;
   a quantity of overlapping parts between the determined PBPS occasions and the second sensing occasions is less than or equal to a twelfth value, or a proportion of the overlapping parts in the determined PBPS occasions is less than or equal to a fourth ratio;
   at least some occasions of the determined PBPS occasions do not overlap each other, or a quantity of overlapping parts between the at least some occasions is less than a thirteenth value, or a proportion of the overlapping parts between the at least some occasions in the determined PBPS occasions is less than a fifth ratio;
   at least part of third reservation period values are greater than or equal to a fourteenth value;
   at least part of fourth reservation period values used for determining PBPS occasions are greater than or equal to a fifteenth value;
   a quantity of non-overlapping parts between the determined CPS occasions and PBPS occasions is greater than or equal to a sixteenth value, or a proportion of the non-overlapping parts in the determined CPS occasions is greater than or equal to a sixth ratio;
   a quantity of non-overlapping parts between the determined CPS occasions and the second sensing occasions is greater than or equal to a seventeenth value, or a proportion of the non-overlapping parts in the determined CPS occasions is greater than or equal to a seventh ratio;
   a quantity of overlapping parts between the determined CPS occasions and the PBPS occasions is less than or equal to an eighteenth value, or a proportion of the overlapping parts in the determined CPS occasions is less than or equal to an eighth ratio;
   a quantity of overlapping parts between the determined CPS occasions and the second sensing occasions is less than or equal to a nineteenth value, or a proportion of the overlapping parts in the determined CPS occasions is less than or equal to a ninth ratio;
   at least some occasions of the determined CPS occasions do not overlap each other, or a quantity of overlapping parts between the at least some occasions is greater than or equal to a twentieth value, or a proportion of the overlapping parts between the at least some occasions in the determined CPS occasions is greater than or equal to a tenth ratio;
   the quantity of the preset occasions in the available resource set is less than or equal to i×P-processing time, where i is a positive integer, P is a fifth reservation period value or the P is a sixth reservation period value used for determining PBPS occasions, and the processing time is greater than or equal to a time required for decoding SCI and/or for preparing to report a target resource;
   a condition that the target sensing occasions include the second sensing occasions is satisfied; and
   no sensing occasion exists in a preset period in a preset period, or a quantity of sensing occasions is less than a preset value in a preset period, or there is no sensing occasion corresponding to the first process in a preset period.

In a possible implementation, that the condition that the target sensing occasions include the second sensing occasions is satisfied includes one or more of the following:
the second sensing occasions are in a preset time range, and the preset time range is any one of a preset time, a preset time window, and a preset timer;
a distance between the second sensing occasion and a moment n is greater than or equal to the processing time, where the moment n is a moment of triggering the first process;
the distance between the second sensing occasion and the moment n is greater than or equal to the processing time;
the second sensing occasions are in a Kth PBPS occasion, where K is a positive integer;
a quantity of overlapping parts between the second sensing occasions and the first sensing occasions is less than or equal to a first threshold, or the quantity of the overlapping parts is greater than or equal to a second threshold, or a proportion of the overlapping parts in the first sensing occasions is less than or equal to an eleventh ratio, or the proportion of the overlapping parts in the first sensing occasions is greater than or equal to a twelfth ratio;
a quantity of non-overlapping parts between the first sensing occasions and the second sensing occasions is less than or equal to a third threshold, or the quantity of the non-overlapping parts is greater than or equal to a fourth threshold, or a proportion of the non-overlapping parts in the first sensing occasions is less than or equal to a thirteenth ratio, or the proportion of the non-overlapping parts in the first sensing occasions is greater than or equal to a fourteenth ratio;
an available resource set corresponding to the second sensing occasions at least partially overlaps an available resource set corresponding to the first sensing occasions;
a quantity of resources of an overlapping part between the available resource set corresponding to the second sensing occasions and the available resource set corresponding to the first sensing occasions is less than or equal to a fifth threshold, or the quantity of the resources of the overlapping part is greater than or equal to a sixth threshold, or a proportion of the quantity of the resources of the overlapping part in the available resource set corresponding to the second sensing occasions or the available resource set corresponding to the first sensing occasions is less than or equal to a fifteenth ratio, or the proportion of the overlapping part in the available resource set corresponding to the second sensing occasion or the available resource set corresponding to the first sensing occasions is greater than or equal to a sixteenth ratio; and
a condition determined by the terminal.

In a possible implementation, the apparatus further includes:
a first execution module, configured for the terminal to skip, in a case that the second preset condition is satisfied, determining a sensing occasion and/or triggering sensing, where
the second preset condition includes one or more of the following:
   one or more items of the first preset condition are not satisfied;
   at least some sensing occasions are contiguous, and a quantity of the sensing occasions or a quantity of the contiguous sensing occasions exceeds a seventh threshold; and
   the quantity of the preset occasions in the available resource set is less than or equal to j ×P-processing time, where j is a positive integer, P is a seventh reservation period value or the P is an eighth reservation period value used for determining PBPS occasions, and the processing time is greater than or equal to a time required for decoding SCI and/or for preparing to report a target resource.

In a possible implementation, the first value, the second value, the third value, the fourth value, the fifth value and/or the sixth value is a first preset value or a product of the first preset value and an adjustment coefficient; and
the first preset value includes any one of the following:
a minimum quantity of sensing occasions;
a minimum resource quantity of an available resource set;
duration of the processing time;
a weighted sum of the minimum quantity of sensing occasions and the minimum resource quantity of the available resource set;
a weighted sum of the minimum quantity of sensing occasions, the minimum resource quantity of the available resource set, and the duration of the processing time; and
a weighted sum of the minimum quantity of sensing occasions and the duration of the processing time.

In a possible implementation, a quantity of sensing occasions, prediction occasions, PBPS occasions, and/or CPS occasions in the first condition, and/or a quantity of sensing occasions, preset occasions, PBPS occasions, and/or CPS occasions in the second condition is a quantity of sensing occasions, preset occasions, PBPS occasions, and/or CPS occasions in a first period; and
the first period includes one or more of the following:
at least part between a first moment and a second moment, where the first moment is a moment n, or the moment n plus a first preset offset, or the moment n minus a second preset offset, the moment n is a moment of triggering the first process, the second moment is a start point of an available resource set, or the start point of the available resource set plus a third preset offset, or the start point of the available resource set minus a fourth preset offset, or a first time-domain unit in the available resource set, or the first time-domain unit in the available resource set plus a fifth preset offset, or the first time-domain unit in the available resource set plus a sixth preset offset; and
a preset time range, where the preset time range is any one of a preset time, a preset time window, and a preset timer.

In a possible implementation, the first condition and/or the second condition further includes one or more of the following:
a quantity of determined and/or triggered sensing occasions of the sensing occasions is greater than or equal to an eighth threshold, or the quantity of the triggered sensing occasions is less than or equal to a ninth threshold, or a proportion of the triggered sensing occasions in the CPS occasions is greater than or equal to a thirteenth ratio, or the proportion is less than or equal to a fourteenth ratio;
a quantity of the second sensing occasions of the sensing occasions is greater than or equal to a tenth threshold, or the quantity of the second sensing occasions is less than or equal to an eleventh threshold, or a proportion of the second sensing occasions in the sensing occasions is greater than or equal to a fifteenth ratio, or the proportion of the second sensing occasions in the sensing occasions is less than or equal to a sixteenth ratio;
a quantity of non-monitor occasions of the sensing occasions is greater than or equal to an eleventh threshold, or the quantity of the non-monitor occasions is less than or equal to a twelfth threshold, or a proportion of the non-monitor occasions in the sensing occasions is greater than or equal to a seventeenth ratio, or the proportion of the non-monitor occasions in the sensing occasions is less than or equal to an eighteenth ratio;
a quantity of first occasions of the sensing occasions is greater than or equal to a twelfth threshold, or the quantity of the first occasions is less than or equal to a thirteenth threshold, or a proportion of the first occasions in the sensing occasions is greater than or equal to a nineteenth ratio, or the proportion of the first occasions in the sensing occasions is less than or equal to a twentieth ratio, and the first occasions are occasions in a resource pool corresponding to the first process;
a quantity of second occasions of the sensing occasions is greater than or equal to a fourteenth threshold, or the quantity of the second occasions is less than or equal to a fifteenth threshold, or a proportion of the second occasions in the sensing occasions is greater than or equal to a twenty-first ratio, or the proportion of the second occasions in the sensing occasions is less than or equal to a twenty-second ratio, and the second occasion is an occasion used for receiving and/or sensing;
a start point of the sensing occasions is less than or equal to a start point of a preset time range, and the preset time range is any one of a preset time, a preset time window, and a preset timer;
an end point of the sensing occasions is greater than or equal to a second moment, the second moment is a start point of an available resource set, or the start point of the available resource set plus a third preset offset, or the start point of the available resource set minus a fourth preset offset, or a first resource in the available resource set plus a fifth preset offset, or the first resource in the available resource set plus a sixth preset offset.

In a possible implementation, the first determining module is further configured to execute one or more of the following in a case that the terminal determines that the first condition is satisfied:
determining, by the terminal, the available resource set;
determining, by the terminal, the sensing occasions and/or triggering, by the terminal, sensing; and
determining, by the terminal, a target resource; and
the apparatus further includes a second execution module, configured to execute one or more of the following in a case that the terminal determines that the first condition is not satisfied:
   performing, by the terminal, random resource selection; and
   not triggeringsensing and/or canceling sensing.

In a possible implementation, the first determining module is further configured to execute one or more of the following in a case that the terminal determines that the second condition is satisfied:
determining, by the terminal, the sensing occasions and/or triggering, by the terminal, sensing; and
determining, by the terminal, a target resource; and
the apparatus further includes: a third execution module, configured to execute one or more of the following in a case that the terminal determines that the second condition is not satisfied:
   determining, by the terminal, the available resource set;
   determining, by the terminal, the sensing occasions and/or triggering, by the terminal, sensing; and
   determining, by the terminal, a target resource.

In a possible implementation, the first determining module is further configured to execute one or more of the following in a case that the terminal first determines that the first condition is satisfied and then determines that the second condition is satisfied, or in a case that the terminal first determines that the first condition is satisfied and then determines that the second condition is not satisfied:
determining, by the terminal, the available resource set;
determining, by the terminal, the sensing occasions and/or triggering, by the terminal, sensing; and
determining, by the terminal, a target resource.

In a possible implementation, the first determining module is further configured to execute one or more of the following in a case that the terminal first determines that the first condition is satisfied and then determines that the second condition is satisfied:
determining, by the terminal, the available resource set;
determining, by the terminal, the sensing occasions and/or triggering, by the terminal, sensing; and
determining, by the terminal, a target resource; and
the first determining module is further configured to execute one or more of the following in a case that the terminal first determines that the second condition is satisfied and then determines that the first condition is not satisfied:
determining, by the terminal, the sensing occasions and/or triggering, by the terminal, sensing; and
determining, by the terminal, a target resource; and
the apparatus further includes a fourth execution module, configured to execute one or more of the following in a case that the terminal first determines that the second condition is satisfied and then determines that the first condition is not satisfied:
   performing, by the terminal, random resource selection; and
   not triggering sensing and/or canceling sensing.
   In a possible implementation, the first value, the second value, the third value, the fourth value, and/or the fifth value is obtained in a preset manner, and that the first condition is satisfied includes:
      the terminal can satisfy the first condition in a case that the first value, the second value, the third value, the fourth value, and/or the fifth value is obtained in the preset manner;
         or
      the terminal does not satisfy the first condition in a case that the first value, the second value, the third value, the fourth value, and/or the fifth value is obtained in the preset manner, and the terminal determines that the first value, the second value, the third value, the fourth value, and/or the fifth value is 0; and
      the preset manner is pre-configured, specified by a protocol, indicated by another terminal, and/or indicated by a higher layer.

In a possible implementation, the apparatus further includes:
a first reporting module, configured for the terminal to report the available resource set; and
a second determining module, configured for the terminal to determine sensing occasions and/or trigger sensing, and determine a target resource according to the determined sensing occasions and/or the triggered sensing.

In a possible implementation, the apparatus further includes:
a fifth execution module, configured for the terminal to report and/or select resources corresponding to sensing occasions.

In a possible implementation, the fifth execution module is further configured to:
indicate, for the terminal through first indication information, that the reported resources have the corresponding sensing occasions.

In a possible implementation, the sensing occasions include CPS occasions, or the sensing occasions include PBPS occasions and CPS occasions.

In this embodiment of this application, according to a first preset condition and/or a second preset condition associated with a target sensing occasion, a terminal determines whether to determine sensing occasions and/or trigger sensing for a first process, thereby avoiding a problem that the terminal frequently triggers sensing and excess power is consumed.

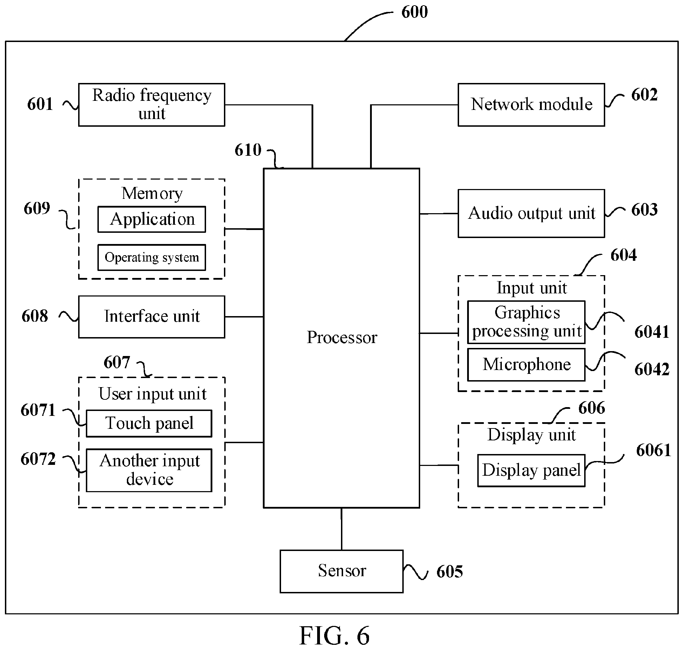

FIG. 6 is a schematic diagram of a hardware structure of a terminal according to an embodiment of this application.

The terminal 600 includes, but is not limited to components such as a radio frequency unit 601, a network module 602, an audio output unit 603, an input unit 604, a sensor 605, a display unit 606, a user input unit 607, an interface unit 608, a memory 609, a processor 610, and the like.

A person skilled in the art may understand that, the terminal 600 may further include a power supply (such as a battery) for supplying power to the components. The power supply may be logically connected to the processor 610 by using a power management system, thereby implementing functions such as charging, discharging, and power consumption management by using the power management system. A terminal structure shown in FIG. 6 does not constitute a limitation to the terminal, and the terminal may include more or fewer components than those shown in the figure, or some components may be combined, or a different component deployment may be used. Details are not described herein again.

It should be understood that, in this embodiment of this application, the input unit 604 may include a graphics processing unit (Graphics Processing Unit, GPU) 6041 and a microphone 6042. The graphics processing unit 6041 performs processing on image data of a static picture or a video that is obtained by an image acquisition device (for example, a camera) in a video acquisition mode or an image acquisition mode. The display unit 606 may include a display panel 6061, for example, a display panel 6061 configured in a form such as a liquid crystal display or an organic light-emitting diode. The user input unit 607 includes a touch panel 6071 and another input device 6072. The touch panel 6071 is also referred to as a touchscreen The touch panel 6071 may include two parts: a touch detection apparatus and a touch controller. The another input device 6072 may include, but not limited to, a physical keyboard, a functional key (such as a volume control key or a switch key), a track ball, a mouse, and a joystick, which are not described herein in detail.

In this embodiment of this application, the radio frequency unit 601 receives downlink data from a network-side device, and then delivers the downlink data to the processor 610 for processing; and in addition, sends uplink data to the network-side device. Generally, the radio frequency unit 601 includes, but is not limited to, an antenna, at least one amplifier, a transceiver, a coupler, a low noise amplifier, a duplexer, and the like.

The memory 609 may be configured to store a software program or instruction and various data. The memory 609 may mainly include a program or instruction storage area and a data storage area. The program or instruction storage region may store an operating system, an application or instruction required by at least one function (for example, a voice playing function or an image playing function), and the like. In addition, the memory 609 may include a high-speed random access memory, or may further include a non-volatile memory, or the like. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. For example, the nonvolatile memory is at least one magnetic disk storage device, a flash memory device, or other non-volatile solid-state storage devices.

The processor 610 may include one or more processing units. Optionally, the processor 610 may integrate an application processor and a modem processor. The application processor mainly processes an operating system, a user interface, an application or instruction, and the like. The modem processor mainly processes wireless communication, and is, for example, a baseband processor. It may be understood that the foregoing modem processor may either not be integrated into the processor 610.

The processor 610 is configured for a terminal to determine, according to a first preset condition and/or a second preset condition, whether to determine sensing occasions and/or trigger sensing for a first process, where
the first preset condition and/or the second preset condition is associated with target sensing occasions, the target sensing occasions include first sensing occasions or the target sensing occasions include first sensing occasions and second sensing occasions, the first sensing occasions are sensing occasions corresponding to the first process, the second sensing occasions do not overlap at least part of the first sensing occasions, at least part of the second sensing occasions are sensing occasions corresponding to a second process, and the second process is a process different from the first process.

In a possible implementation, the sensing occasions include one or more of the following:
periodic based partial sensing PBPS occasions; and
contiguous partial sensing CPS occasions.

In a possible implementation, the first preset condition includes one or more of the following:
a first condition for determining sensing occasions and/or triggering sensing, where the first condition includes one or more of the following:
a quantity of triggered sensing occasions is greater than or equal to a first value;
a sum of a quantity of the second sensing occasions and the quantity of the triggered sensing occasions is greater than or equal to a second value;
the quantity of the second sensing occasions is greater than or equal to a third value;
a quantity of preset occasions is greater than or equal to a fourth value, where the preset occasion is any one of a sensing occasion, a sidelink SL occasion, an SL occasion not used for synchronous signal transmission, an occasion other than a non-monitor occasion, and an SL occasion in a resource pool; and
a quantity of sensing occasions determined by the terminal is greater than or equal to a fifth value; and
a second condition for determining a sensing occasion and/or triggering sensing, where the second condition includes:
   a quantity of preset occasions in an available resource set which is determined by the terminal is greater than or equal to a sixth value;
   at least part of first reservation period values are less than or equal to a seventh value;
   at least part of second reservation period values used for determining PBPS occasions are less than or equal to an eighth value;
   a quantity of non-overlapping parts between the determined PBPS occasions and CPS occasions is greater than or equal to a ninth value, or a proportion of the non-overlapping parts in the determined PBPS occasions is greater than or equal to a first ratio;
   a quantity of non-overlapping parts between the determined PBPS occasions and the second sensing occasions is greater than or equal to a tenth value, or a proportion of the non-overlapping parts in the determined PBPS occasions is greater than or equal to a second ratio;
   a quantity of overlapping parts between the determined PBPS occasions and the CPS occasions is less than or equal to an eleventh value, or a proportion of the overlapping parts in the determined PBPS occasions is less than or equal to a third ratio;
   a quantity of overlapping parts between the determined PBPS occasions and the second sensing occasions is less than or equal to a twelfth value, or a proportion of the overlapping parts in the determined PBPS occasions is less than or equal to a fourth ratio;
   at least some occasions of the determined PBPS occasions do not overlap each other, or a quantity of overlapping parts between the at least some occasions is less than a thirteenth value, or a proportion of the overlapping parts between the at least some occasions in the determined PBPS occasions is less than a fifth ratio;
   at least part of third reservation period values are greater than or equal to a fourteenth value;
   at least part of fourth reservation period values used for determining PBPS occasions are greater than or equal to a fifteenth value;
   a quantity of non-overlapping parts between the determined CPS occasions and PBPS occasions is greater than or equal to a sixteenth value, or a proportion of the non-overlapping parts in the determined CPS occasions is greater than or equal to a sixth ratio;
   a quantity of non-overlapping parts between the determined CPS occasions and the second sensing occasions is greater than or equal to a seventeenth value, or a proportion of the non-overlapping parts in the determined CPS occasions is greater than or equal to a seventh ratio;
   a quantity of overlapping parts between the determined CPS occasions and the PBPS occasions is less than or equal to an eighteenth value, or a proportion of the overlapping parts in the determined CPS occasions is less than or equal to an eighth ratio;
   a quantity of overlapping parts between the determined CPS occasions and the second sensing occasions is less than or equal to a nineteenth value, or a proportion of the overlapping parts in the determined CPS occasions is less than or equal to a ninth ratio;
   at least some occasions of the determined CPS occasions do not overlap each other, or a quantity of overlapping parts between the at least some occasions is greater than or equal to a twentieth value, or a proportion of the overlapping parts between the at least some occasions in the determined CPS occasions is greater than or equal to a tenth ratio;
   the quantity of the preset occasions in the available resource set is less than or equal to i×P-processing time, where i is a positive integer, P is a fifth reservation period value or the P is a sixth reservation period value used for determining PBPS occasions, and the processing time is greater than or equal to a time required for decoding SCI and/or for preparing to report a target resource;
   a condition that the target sensing occasions include the second sensing occasions is satisfied; and
   no sensing occasion exists in a preset period, or a quantity of sensing occasions is less than a preset value in a preset period, or there is no sensing occasion corresponding to the first process in a preset period.

In a possible implementation, that the condition that the target sensing occasions include the second sensing occasions is satisfied includes one or more of the following:
the second sensing occasions are in a preset time range, and the preset time range is any one of a preset time, a preset time window, and a preset timer;
a distance between the second sensing occasion and a moment n is greater than or equal to the processing time, where the moment n is a moment of triggering the first process;
the distance between the second sensing occasion and the moment n is greater than or equal to the processing time;
the second sensing occasions are in a Kth PBPS occasion, where K is a positive integer;
a quantity of overlapping parts between the second sensing occasions and the first sensing occasions is less than or equal to a first threshold, or the quantity of the overlapping parts is greater than or equal to a second threshold, or a proportion of the overlapping parts in the first sensing occasions is less than or equal to an eleventh ratio, or the proportion of the overlapping parts in the first sensing occasions is greater than or equal to a twelfth ratio;
a quantity of non-overlapping parts between the first sensing occasions and the second sensing occasions is less than or equal to a third threshold, or the quantity of the non-overlapping parts is greater than or equal to a fourth threshold, or a proportion of the non-overlapping parts in the first sensing occasions is less than or equal to a thirteenth ratio, or the proportion of the non-overlapping parts in the first sensing occasions is greater than or equal to a fourteenth ratio;
an available resource set corresponding to the second sensing occasions at least partially overlaps an available resource set corresponding to the first sensing occasions;
a quantity of resources of an overlapping part between the available resource set corresponding to the second sensing occasions and the available resource set corresponding to the first sensing occasions is less than or equal to a fifth threshold, or the quantity of the resources of the overlapping part is greater than or equal to a sixth threshold, or a proportion of the quantity of the resources of the overlapping part in the available resource set corresponding to the second sensing occasions or the available resource set corresponding to the first sensing occasions is less than or equal to a fifteenth ratio, or the proportion of the overlapping part in the available resource set corresponding to the second sensing occasion or the available resource set corresponding to the first sensing occasions is greater than or equal to a sixteenth ratio; and
a condition determined by the terminal.

In a possible implementation, the apparatus further includes:
a processor 610, configured for the terminal to skip, in a case that the second preset condition is satisfied, determining a sensing occasion and/or triggering sensing, where
the second preset condition includes one or more of the following:
   one or more items of the first preset condition are not satisfied;
   at least some sensing occasions are contiguous, and a quantity of the sensing occasions or a quantity of the contiguous sensing occasions exceeds a seventh threshold; and
   the quantity of the preset occasions in the available resource set is less than or equal to j ×P-processing time, where j is a positive integer, P is a seventh reservation period value or the P is an eighth reservation period value used for determining PBPS occasions, and the processing time is greater than or equal to a time required for decoding SCI and/or for preparing to report a target resource.

In a possible implementation, the first value, the second value, the third value, the fourth value, the fifth value and/or the sixth value is a first preset value or a product of the first preset value and an adjustment coefficient; and
the first preset value includes any one of the following:
a minimum quantity of sensing occasions;
a minimum resource quantity of an available resource set;
duration of the processing time;
a weighted sum of the minimum quantity of sensing occasions and the minimum resource quantity of the available resource set;
a weighted sum of the minimum quantity of sensing occasions, the minimum resource quantity of the available resource set, and the duration of the processing time; and
a weighted sum of the minimum quantity of sensing occasions and the duration of the processing time.

In a possible implementation, a quantity of sensing occasions, prediction occasions, PBPS occasions, and/or CPS occasions in the first condition, and/or a quantity of sensing occasions, preset occasions, PBPS occasions, and/or CPS occasions in the second condition is a quantity of sensing occasions, preset occasions, PBPS occasions, and/or CPS occasions in a first period; and
the first period includes one or more of the following:
at least part between a first moment and a second moment, where the first moment is a moment n, or the moment n plus a first preset offset, or the moment n minus a second preset offset, the moment n is a moment of triggering the first process, the second moment is a start point of an available resource set, or the start point of the available resource set plus a third preset offset, or the start point of the available resource set minus a fourth preset offset, or a first time-domain unit in the available resource set, or the first time-domain unit in the available resource set plus a fifth preset offset, or the first time-domain unit in the available resource set plus a sixth preset offset; and
a preset time range, where the preset time range is any one of a preset time, a preset time window, and a preset timer.

In a possible implementation, the first condition and/or the second condition further includes one or more of the following:
a quantity of determined and/or triggered sensing occasions of the sensing occasions is greater than or equal to an eighth threshold, or the quantity of the triggered sensing occasions is less than or equal to a ninth threshold, or a proportion of the triggered sensing occasions in the CPS occasions is greater than or equal to a thirteenth ratio, or the proportion is less than or equal to a fourteenth ratio;
a quantity of the second sensing occasions of the sensing occasions is greater than or equal to a tenth threshold, or the quantity of the second sensing occasions is less than or equal to an eleventh threshold, or a proportion of the second sensing occasions in the sensing occasions is greater than or equal to a fifteenth ratio, or the proportion of the second sensing occasions in the sensing occasions is less than or equal to a sixteenth ratio;
a quantity of non-monitor occasions of the sensing occasions is greater than or equal to an eleventh threshold, or the quantity of the non-monitor occasions is less than or equal to a twelfth threshold, or a proportion of the non-monitor occasions in the sensing occasions is greater than or equal to a seventeenth ratio, or the proportion of the non-monitor occasions in the sensing occasions is less than or equal to an eighteenth ratio;
a quantity of first occasions of the sensing occasions is greater than or equal to a twelfth threshold, or the quantity of the first occasions is less than or equal to a thirteenth threshold, or a proportion of the first occasions in the sensing occasions is greater than or equal to a nineteenth ratio, or the proportion of the first occasions in the sensing occasions is less than or equal to a twentieth ratio, and the first occasions are occasions in a resource pool corresponding to the first process;
a quantity of second occasions of the sensing occasions is greater than or equal to a fourteenth threshold, or the quantity of the second occasions is less than or equal to a fifteenth threshold, or a proportion of the second occasions in the sensing occasions is greater than or equal to a twenty-first ratio, or the proportion of the second occasions in the sensing occasions is less than or equal to a twenty-second ratio, and the second occasion is an occasion used for receiving and/or sensing;
a start point of the sensing occasions is less than or equal to a start point of a preset time range, and the preset time range is any one of a preset time, a preset time window, and a preset timer;
an end point of the sensing occasions is greater than or equal to a second moment, the second moment is a start point of an available resource set, or the start point of the available resource set plus a third preset offset, or the start point of the available resource set minus a fourth preset offset, or a first resource in the available resource set plus a fifth preset offset, or the first resource in the available resource set plus a sixth preset offset.

In a possible implementation, the processor 610 is configured to execute one or more of the following in a case that the terminal determines that the first condition is satisfied:
determining, by the terminal, the available resource set;
determining, by the terminal, the sensing occasions and/or triggering, by the terminal, sensing; and
determining, by the terminal, a target resource; and
the processor 610 is configured to execute one or more of the following in a case that the terminal determines that the first condition is not satisfied:
   performing, by the terminal, random resource selection; and
   not triggering sensing and/or canceling sensing.
   In a possible implementation, the processor 610 is configured to execute one or more of the following in a case that the terminal determines that the second condition is satisfied:
      determining, by the terminal, the sensing occasions and/or triggering, by the terminal, sensing; and
      determining, by the terminal, a target resource; and
      the processor 610 is configured to execute one or more of the following in a case that the terminal determines that the second condition is not satisfied:
         determining, by the terminal, the available resource set;
         determining, by the terminal, the sensing occasions and/or triggering, by the terminal, sensing; and
         determining, by the terminal, a target resource.

In a possible implementation, the processor 610 is configured to execute one or more of the following in a case that the terminal first determines that the first condition is satisfied and then determines that the second condition is satisfied, or in a case that the terminal first determines that the first condition is satisfied and then determines that the second condition is not satisfied:
determining, by the terminal, the available resource set;
determining, by the terminal, the sensing occasions and/or triggering, by the terminal, sensing; and
determining, by the terminal, a target resource.

In a possible implementation, the processor 610 is configured to execute one or more of the following in a case that the terminal first determines that the first condition is satisfied and then determines that the second condition is satisfied:
determining, by the terminal, the available resource set;
determining, by the terminal, the sensing occasions and/or triggering, by the terminal, sensing; and
determining, by the terminal, a target resource; and
the processor 610 is configured to execute one or more of the following in a case that the terminal first determines that the second condition is satisfied and then determines that the first condition is not satisfied:
   determining, by the terminal, the sensing occasions and/or triggering, by the terminal, sensing; and
   determining, by the terminal, a target resource; and
   the processor 610 is configured to execute one or more of the following in a case that the terminal first determines that the second condition is satisfied and then determines that the first condition is not satisfied:
      performing, by the terminal, random resource selection; and
      not triggering sensing and/or canceling sensing.

In a possible implementation, the first value, the second value, the third value, the fourth value, and/or the fifth value is obtained in a preset manner, and that the first condition is satisfied includes:
the terminal can satisfy the first condition in a case that the first value, the second value, the third value, the fourth value, and/or the fifth value is obtained in the preset manner;
   or
the terminal does not satisfy the first condition in a case that the first value, the second value, the third value, the fourth value, and/or the fifth value is obtained in the preset manner, and the terminal determines that the first value, the second value, the third value, the fourth value, and/or the fifth value is 0; and
the preset manner is pre-configured, specified by a protocol, indicated by another terminal, and/or indicated by a higher layer.

In a possible implementation, the processor 610 is configured for the terminal to report the available resource set; and
the processor 610 is configured for the terminal to determine sensing occasions and/or trigger sensing, and determine a target resource according to the determined sensing occasions and/or the triggered sensing.

In a possible implementation, the processor 610 is configured for the terminal to report and/or select resources corresponding to sensing occasions.

In a possible implementation, the processor 610 is configured to:
indicate, for the terminal through first indication information, that the reported resources have the corresponding sensing occasions.

In a possible implementation, the sensing occasions include CPS occasions, or the sensing occasions include PBPS occasions and CPS occasions.

In this embodiment of this application, according to a first preset condition and/or a second preset condition associated with a target sensing occasion, a terminal determines whether to determine sensing occasions and/or trigger sensing for a first process, thereby avoiding a problem that the terminal frequently triggers sensing and excess power is consumed.

An embodiment of this application further provides a program product, stored in a non-volatile storage medium, the program product is executed by at least one processor to implement the steps of the processing method shown in FIG. 2.

An embodiment of this application further provides a readable storage medium. The readable storage medium may be volatile or non-volatile. The readable storage medium stores a program or instructions, and when executed by a processor, the program or instructions implement the processes of the method embodiment shown in FIG. 2, and can achieve the same technical effects. To avoid repetition, details are not described herein again.

The processor is a processor in the terminal described in the foregoing embodiments. The readable storage medium includes a computer-readable storage medium, for example, a computer read-only memory (Read-Only Memory, ROM), a random access memory (Random Access Memory, RAM), a magnetic disk, an optical disc, or the like.

An embodiment of this application further provides a computer program product. The computer program product is stored in a non-transient storage medium, and the computer program product is executed by at least one processor to implement the processes of the method embodiment shown in FIG. 2, and can achieve the same technical effects. To avoid repetition, details are not described herein again.

An embodiment of this application further provides a chip. The chip includes a processor and a communication interface. The communication interface is coupled to the processor. The processor is configured to run a program or instructions of a network-side device to implement the processes of the method embodiment shown in FIG. 2, and can achieve the same technical effects. To avoid repetition, details are not described herein again.

It should be noted that, the chip mentioned in the embodiments of this application may also be referred to as a system-level chip, a system chip, a chip system, a system on chip, or the like.

It should be noted that the terms "include", "include", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses. In addition, it should be noted that the range of the method and apparatus in the implementations of this application is not limited to performing functions in the shown or discussed order, and may further include performing functions in a basically simultaneous manner or in reverse order according to the involved functions. For example, the described method may be performed in an order different from the described order, and steps may be further added, omitted, or combined. In addition, features described with reference to some examples may be combined in other examples.

Through the descriptions of the foregoing implementations, a person skilled in the art may clearly understand that the method according to the foregoing embodiments may be implemented through software and a necessary general hardware platform, and certainly, may alternatively be implemented by hardware, but in many cases, the former manner is a better implementation. Based on such an understanding, the technical solutions of this application essentially or the part contributing to the conventional technology may be implemented in a form of a software product. The computer software product is stored in a storage medium (such as a ROM/RAM, a magnetic disk, or an optical disc) and includes several instructions for instructing a terminal (which may be a mobile phone, a computer, a server, an air conditioner, a network device, or the like) to perform the methods described in the embodiments of this application.

The embodiments of this application have been described above with reference to the accompanying drawings. This application is not limited to the specific embodiments described above, and the specific embodiments described above are merely exemplary and not limitative. Those of ordinary skill in the art may make various variations under the teaching of this application without departing from the spirit of this application and the protection scope of the claims, and such variations shall all fall within the protection scope of this application.

## Claims

1. A sensing trigger method, comprising:
determining, by a terminal according to a first preset condition and/or a second preset condition, whether to determine sensing occasions and/or trigger sensing for a first process, wherein
the first preset condition and/or the second preset condition is associated with target sensing occasions, the target sensing occasions comprise first sensing occasions or the target sensing occasions comprise first sensing occasions and second sensing occasions, the first sensing occasions are sensing occasions corresponding to the first process, the second sensing occasions do not overlap at least part of the first sensing occasions, at least part of the second sensing occasions are sensing occasions corresponding to a second process, and the second process is a process different from the first process.

2. The method according to claim 1, wherein the sensing occasions comprise one or more of the following:
periodic based partial sensing PBPS occasions; and
contiguous partial sensing CPS occasions.

3. The method according to claim 1, wherein the first preset condition comprises one or more of the following:
a first condition for determining sensing occasions and/or triggering sensing, wherein the first condition comprises one or more of the following:
a quantity of triggered sensing occasions is greater than or equal to a first value;
a sum of a quantity of the second sensing occasions and the quantity of the triggered sensing occasions is greater than or equal to a second value;
the quantity of the second sensing occasions is greater than or equal to a third value;
a quantity of preset occasions is greater than or equal to a fourth value, wherein the preset occasion is any one of a sensing occasion, a sidelink SL occasion, an SL occasion not used for synchronous signal transmission, an occasion other than a non-monitor occasion, and an SL occasion in a resource pool; and
a quantity of sensing occasions determined by the terminalis greater than or equal to a fifth value;
and,
a second condition for determining a sensing occasion and/or triggering sensing, wherein the second condition comprises:
a quantity of preset occasions in an available resource set which is determined by the terminal is greater than or equal to a sixth value;
at least part of first reservation period values are less than or equal to a seventh value;
at least part of second reservation period values used for determining PBPS occasions are less than or equal to an eighth value;
a quantity of non-overlapping parts between the determined PBPS occasions and CPS occasions is greater than or equal to a ninth value, or a proportion of the non-overlapping parts in the determined PBPS occasions is greater than or equal to a first ratio;
a quantity of non-overlapping parts between the determined PBPS occasions and the second sensing occasions is greater than or equal to a tenth value, or a proportion of the non-overlapping parts in the determined PBPS occasions is greater than or equal to a second ratio;
a quantity of overlapping parts between the determined PBPS occasions and the CPS occasions is less than or equal to an eleventh value, or a proportion of the overlapping parts in the determined PBPS occasions is less than or equal to a third ratio;
a quantity of overlapping parts between the determined PBPS occasions and the second sensing occasions is less than or equal to a twelfth value, or a proportion of the overlapping parts in the determined PBPS occasions is less than or equal to a fourth ratio;
at least some occasions of the determined PBPS occasions do not overlap each other, or a quantity of overlapping parts between the at least some occasions is less than a thirteenth value, or a proportion of the overlapping parts between the at least some occasions in the determined PBPS occasions is less than a fifth ratio;
at least part of third reservation period values are greater than or equal to a fourteenth value;
at least part of fourth reservation period values used for determining PBPS occasions are greater than or equal to a fifteenth value;
a quantity of non-overlapping parts between the determined CPS occasions and PBPS occasions is greater than or equal to a sixteenth value, or a proportion of the non-overlapping parts in the determined CPS occasions is greater than or equal to a sixth ratio;
a quantity of non-overlapping parts between the determined CPS occasions and the second sensing occasions is greater than or equal to a seventeenth value, or a proportion of the non-overlapping parts in the determined CPS occasions is greater than or equal to a seventh ratio;
a quantity of overlapping parts between the determined CPS occasions and the PBPS occasions is less than or equal to an eighteenth value, or a proportion of the overlapping parts in the determined CPS occasions is less than or equal to an eighth ratio;
a quantity of overlapping parts between the determined CPS occasions and the second sensing occasions is less than or equal to a nineteenth value, or a proportion of the overlapping parts in the determined CPS occasions is less than or equal to a ninth ratio;
at least some occasions of the determined CPS occasions do not overlap each other, or a quantity of overlapping parts between the at least some occasions is greater than or equal to a twentieth value, or a proportion of the overlapping parts between the at least some occasions in the determined CPS occasions is greater than or equal to a tenth ratio;
the quantity of the preset occasions in the available resource set is less than or equal to i×P-processing time, wherein i is a positive integer, P is a fifth reservation period value or the P is a sixth reservation period value used for determining PBPS occasions, and the processing time is greater than or equal to a time required for decoding sidelink control information SCI and/or for preparing to report a target resource;
a condition that the target sensing occasions comprise the second sensing occasions is satisfied; and
no sensing occasion exists in a preset period, or a quantity of sensing occasions in a preset period is less than a preset value, or there is no sensing occasion corresponding to the first process in a preset period.

4. The method according to claim 3, wherein that the condition that the target sensing occasions comprise the second sensing occasions is satisfied comprises one or more of the following:
the second sensing occasions are in a preset time range;
a distance between the second sensing occasion and a moment n is greater than or equal to the processing time, wherein the moment n is a moment of triggering the first process;
the distance between the second sensing occasion and the moment n is greater than or equal to the processing time;
the second sensing occasions are in a Kth PBPS occasion, wherein K is a positive integer;
a quantity of overlapping parts between the second sensing occasions and the first sensing occasions is less than or equal to a first threshold, or the quantity of the overlapping parts is greater than or equal to a second threshold, or a proportion of the overlapping parts in the first sensing occasions is less than or equal to an eleventh ratio, or the proportion of the overlapping parts in the first sensing occasions is greater than or equal to a twelfth ratio;
a quantity of non-overlapping parts between the first sensing occasions and the second sensing occasions is less than or equal to a third threshold, or the quantity of the non-overlapping parts is greater than or equal to a fourth threshold, or a proportion of the non-overlapping parts in the first sensing occasions is less than or equal to a thirteenth ratio, or the proportion of the non-overlapping parts in the first sensing occasions is greater than or equal to a fourteenth ratio;
an available resource set corresponding to the second sensing occasions at least partially overlaps an available resource set corresponding to the first sensing occasions;
a quantity of resources of an overlapping part between the available resource set corresponding to the second sensing occasions and the available resource set corresponding to the first sensing occasions is less than or equal to a fifth threshold, or the quantity of the resources of the overlapping part is greater than or equal to a sixth threshold, or a proportion of the quantity of the resources of the overlapping part in the available resource set corresponding to the second sensing occasions or the available resource set corresponding to the first sensing occasions is less than or equal to a fifteenth ratio, or the proportion of the overlapping part in the available resource set corresponding to the second sensing occasion or the available resource set corresponding to the first sensing occasions is greater than or equal to a sixteenth ratio; and
a condition determined by the terminal.

5. The method according to claim 1, wherein the method further comprises:
skipping, by the terminal in a case that the second preset condition is satisfied, determining a sensing occasion and/or triggering sensing, wherein
the second preset condition comprises one or more of the following:
one or more items of the first preset condition are not satisfied;
at least some sensing occasions are contiguous, and a quantity of the sensing occasions or a quantity of the contiguous sensing occasions exceeds a seventh threshold; and
the quantity of the preset occasions in the available resource set is less than or equal to j×P-processing time, wherein j is a positive integer, P is a seventh reservation period value or the P is an eighth reservation period value used for determining PBPS occasions, and the processing time is greater than or equal to a time required for decoding SCI and/or for preparing to report a target resource.

6. The method according to claim 3, wherein the first value, the second value, the third value, the fourth value, the fifth value and/or the sixth value is a first preset value or a product of the first preset value and an adjustment coefficient; and
the first preset value comprises any one of the following:
a minimum quantity of sensing occasions;
a minimum resource quantity of an available resource set;
duration of the processing time;
a weighted sum of the minimum quantity of sensing occasions and the minimum resource quantity of the available resource set;
a weighted sum of the minimum quantity of sensing occasions, the minimum resource quantity of the available resource set, and the duration of the processing time; and
a weighted sum of the minimum quantity of sensing occasions and the duration of the processing time.

7. The method according to claim 3, wherein
a quantity of sensing occasions, prediction occasions, PBPS occasions, and/or CPS occasions in the first condition, and/or a quantity of sensing occasions, preset occasions, PBPS occasions, and/or CPS occasions in the second condition is a quantity of sensing occasions, preset occasions, PBPS occasions, and/or CPS occasions in a first period; and
the first period comprises one or more of the following:
at least part time between a first moment and a second moment, wherein the first moment is a moment n, or the moment n plus a first preset offset, or the moment n minus a second preset offset, the moment n is a moment of triggering the first process, the second moment is a start point of an available resource set, or the start point of the available resource set plus a third preset offset, or the start point of the available resource set minus a fourth preset offset, or a first time-domain unit in the available resource set, or the first time-domain unit in the available resource set plus a fifth preset offset, or the first time-domain unit in the available resource set plus a sixth preset offset; and
a preset time range.

8. The method according to claim 3, wherein the first condition and/or the second condition further comprises one or more of the following:
a quantity of determined and/or triggered sensing occasions of the sensing occasions is greater than or equal to an eighth threshold, or the quantity of the triggered sensing occasions is less than or equal to a ninth threshold, or a proportion of the triggered sensing occasions in the CPS occasions is greater than or equal to a thirteenth ratio, or the proportion is less than or equal to a fourteenth ratio;
a quantity of the second sensing occasions of the sensing occasions is greater than or equal to a tenth threshold, or the quantity of the second sensing occasions is less than or equal to an eleventh threshold, or a proportion of the second sensing occasions in the sensing occasions is greater than or equal to a fifteenth ratio, or the proportion of the second sensing occasions in the sensing occasions is less than or equal to a sixteenth ratio;
a quantity of non-monitor occasions of the sensing occasions is greater than or equal to an eleventh threshold, or the quantity of the non-monitor occasions is less than or equal to a twelfth threshold, or a proportion of the non-monitor occasions in the sensing occasions is greater than or equal to a seventeenth ratio, or the proportion of the non-monitor occasions in the sensing occasions is less than or equal to an eighteenth ratio;
a quantity of first occasions of the sensing occasions is greater than or equal to a twelfth threshold, or the quantity of the first occasions is less than or equal to a thirteenth threshold, or a proportion of the first occasions in the sensing occasions is greater than or equal to a nineteenth ratio, or the proportion of the first occasions in the sensing occasions is less than or equal to a twentieth ratio, and the first occasions are occasions in a resource pool corresponding to the first process;
a quantity of second occasions of the sensing occasions is greater than or equal to a fourteenth threshold, or the quantity of the second occasions is less than or equal to a fifteenth threshold, or a proportion of the second occasions in the sensing occasions is greater than or equal to a twenty-first ratio, or the proportion of the second occasions in the sensing occasions is less than or equal to a twenty-second ratio, and the second occasion is an occasion used for receiving and/or sensing;
a start point of the sensing occasions is less than or equal to a start point of a preset time range; and
an end point of the sensing occasions is greater than or equal to a second moment, the second moment is a start point of an available resource set, or the start point of the available resource set plus a third preset offset, or the start point of the available resource set minus a fourth preset offset, or a first resource in the available resource set plus a fifth preset offset, or the first resource in the available resource set plus a sixth preset offset.

9. The method according to claim 3, wherein
in a case that the terminal determines that the first condition is satisfied, determining, by the terminal, the sensing occasions, and/or triggering, by the terminal, sensing for the first process comprises one or more of the following:
determining, by the terminal, the available resource set;
determining, by the terminal, the sensing occasions and/or triggering, by the terminal, sensing; and
determining, by the terminal, a target resource;
in a case that the terminal determines that the first condition is not satisfied, the method further comprises one or more of the following:
performing, by the terminal, random resource selection; and
not triggering sensing and/or canceling sensing.

10. The method according to claim 3, wherein
in a case that the terminal determines that the second condition is satisfied, determining, by the terminal, the sensing occasions and/or triggering, by the terminal, sensing for the first process comprises one or more of the following:
determining, by the terminal, the sensing occasions and/or triggering, by the terminal, sensing; and
determining, by the terminal, a target resource;
in a case that the terminal determines that the second condition is not satisfied, the method further comprises:
determining, by the terminal, the available resource set;
determining, by the terminal, the sensing occasions and/or triggering, by the terminal, sensing; and
determining, by the terminal, a target resource.

11. The method according to claim 3, wherein
in a case that the terminal first determines that the first condition is satisfied and then determines that the second condition is satisfied, or in a case that the terminal first determines that the first condition is satisfied and then determines that the second condition is not satisfied, determining, by the terminal, the sensing occasions and/or triggering, by the terminal, sensing for the first process comprises one or more of the following:
determining, by the terminal, the available resource set;
determining, by the terminal, the sensing occasions and/or triggering, by the terminal, sensing; and
determining, by the terminal, a target resource.

12. The method according to claim 3, wherein
in a case that the terminal first determines that the first condition is satisfied and then determines that the second condition is satisfied, determining, by the terminal, the sensing occasions and/or triggering, by the terminal, sensing for the first process comprises one or more of the following:
determining, by the terminal, the available resource set;
determining, by the terminal, the sensing occasions and/or triggering, by the terminal, sensing; and
determining, by the terminal, a target resource; and
in a case that the terminal first determines that the second condition is satisfied and then determines that the first condition is not satisfied, the determining, by the terminal, the sensing occasions and/or triggering, by the terminal, sensing for the first process comprises one or more of the following:
determining, by the terminal, the sensing occasions and/or triggering, by the terminal, sensing; and
determining, by the terminal, a target resource;
in a case that the terminal first determines that the second condition is satisfied and then determines that the first condition is not satisfied, the method further comprises:
performing, by the terminal, random resource selection; and
nottriggering sensing and/or canceling sensing.

13. The method according to claim 3, wherein the first value, the second value, the third value, the fourth value, and/or the fifth value is obtained in a preset manner, and that the first condition is satisfied comprises:
the terminal can satisfy the first condition in a case that the first value, the second value, the third value, the fourth value, and/or the fifth value is obtained in the preset manner;
or
the terminal does not satisfy the first condition in a case that the first value, the second value, the third value, the fourth value, and/or the fifth value is obtained in the preset manner, and the terminal determines that the first value, the second value, the third value, the fourth value, and/or the fifth value is 0; and
the preset manner is pre-configured, specified by a protocol, indicated by another terminal, and/or indicated by a higher layer.

14. The method according to claim 3, wherein the method further comprises one or more of the following:
reporting, by the terminal, the available resource set; and
determining, by the terminal, sensing occasions, and/or triggering, by the terminal, sensing, and determining a target resource according to the determined sensing occasions and/or the triggered sensing.

15. The method according to claim 3, wherein the method further comprises:
reporting and/or selecting, by the terminal, resources corresponding to sensing occasions.

16. The method according to claim 15, wherein the reporting, by the terminal, resources corresponding to sensing occasions comprises:
indicating, by the terminal through first indication information, that the reported resources have the corresponding sensing occasions.

17. The method according to claim 15, wherein the sensing occasions comprise CPS occasions, or the sensing occasions comprise PBPS occasions and CPS occasions.

18. A sensing trigger apparatus, comprising:
a first determining module, configured for a terminal to determine, according to a first preset condition and/or a second preset condition, whether to determine sensing occasions and/or trigger sensing for a first process, wherein
the first preset condition and/or the second preset condition is associated with target sensing occasions, the target sensing occasions comprise first sensing occasions or the target sensing occasions comprise first sensing occasions and second sensing occasions, the first sensing occasions are sensing occasions corresponding to the first process, the second sensing occasions do not overlap at least part of the first sensing occasions, at least part of the second sensing occasions are sensing occasions corresponding to a second process, and the second process is a process different from the first process.

19. The apparatus according to claim 18, wherein the sensing occasions comprise one or more of the following:
periodic based partial sensing PBPS occasions; and
contiguous partial sensing CPS occasions.

20. The apparatus according to claim 18, wherein the first preset condition comprises one or more of the following:
a first condition for determining sensing occasions and/or triggering sensing, wherein the first condition comprises one or more of the following:
a quantity of triggered sensing occasions is greater than or equal to a first value;
a sum of a quantity of the second sensing occasions and the quantity of the triggered sensing occasions is greater than or equal to a second value;
the quantity of the second sensing occasions is greater than or equal to a third value;
a quantity of preset occasions is greater than or equal to a fourth value, wherein the preset occasion is any one of a sensing occasion, a sidelink SL occasion, an SL occasion not used for synchronous signal transmission, an occasion other than a non-monitor occasion, and an SL occasion in a resource pool; and
a quantity of sensing occasions determined by the terminal is greater than or equal to a fifth value; and
a second condition for determining a sensing occasion and/or triggering sensing, wherein the second condition comprises:
a quantity of preset occasions in an available resource set which is determined by the terminal is greater than or equal to a sixth value;
at least part of first reservation period values are less than or equal to a seventh value;
at least part of second reservation period values used for determining PBPS occasions are less than or equal to an eighth value;
a quantity of non-overlapping parts between the determined PBPS occasions and CPS occasions is greater than or equal to a ninth value, or a proportion of the non-overlapping parts in the determined PBPS occasions is greater than or equal to a first ratio;
a quantity of non-overlapping parts between the determined PBPS occasions and the second sensing occasions is greater than or equal to a tenth value, or a proportion of the non-overlapping parts in the determined PBPS occasions is greater than or equal to a second ratio;
a quantity of overlapping parts between the determined PBPS occasions and the CPS occasions is less than or equal to an eleventh value, or a proportion of the overlapping parts in the determined PBPS occasions is less than or equal to a third ratio;
a quantity of overlapping parts between the determined PBPS occasions and the second sensing occasions is less than or equal to a twelfth value, or a proportion of the overlapping parts in the determined PBPS occasions is less than or equal to a fourth ratio;
at least some occasions of the determined PBPS occasions do not overlap each other, or a quantity of overlapping parts between the at least some occasions is less than a thirteenth value, or a proportion of the overlapping parts between the at least some occasions in the determined PBPS occasions is less than a fifth ratio;
at least part of third reservation period values are greater than or equal to a fourteenth value;
at least part of fourth reservation period values used for determining PBPS occasions are greater than or equal to a fifteenth value;
a quantity of non-overlapping parts between the determined CPS occasions and PBPS occasions is greater than or equal to a sixteenth value, or a proportion of the non-overlapping parts in the determined CPS occasions is greater than or equal to a sixth ratio;
a quantity of non-overlapping parts between the determined CPS occasions and the second sensing occasions is greater than or equal to a seventeenth value, or a proportion of the non-overlapping parts in the determined CPS occasions is greater than or equal to a seventh ratio;
a quantity of overlapping parts between the determined CPS occasions and the PBPS occasions is less than or equal to an eighteenth value, or a proportion of the overlapping parts in the determined CPS occasions is less than or equal to an eighth ratio;
a quantity of overlapping parts between the determined CPS occasions and the second sensing occasions is less than or equal to a nineteenth value, or a proportion of the overlapping parts in the determined CPS occasions is less than or equal to a ninth ratio;
at least some occasions of the determined CPS occasions do not overlap each other, or a quantity of overlapping parts between the at least some occasions is greater than or equal to a twentieth value, or a proportion of the overlapping parts between the at least some occasions in the determined CPS occasions is greater than or equal to a tenth ratio;
the quantity of the preset occasions in the available resource set is less than or equal to i×P-processing time, wherein i is a positive integer, P is a fifth reservation period value or the P is a sixth reservation period value used for determining PBPS occasions, and the processing time is greater than or equal to a time required for decoding SCI and/or for preparing to report a target resource;
a condition that the target sensing occasions comprise the second sensing occasions is satisfied; and
no sensing occasion exists in a preset period, or a quantity of sensing occasions is less than a preset value in a preset period, or there is no sensing occasion corresponding to the first process in a preset period.

21. The apparatus according to claim 20, wherein that the condition that the target sensing occasions comprise the second sensing occasions is satisfied comprises one or more of the following:
the second sensing occasions are in a preset time range;
a distance between the second sensing occasion and a moment n is greater than or equal to the processing time, wherein the moment n is a moment of triggering the first process;
the distance between the second sensing occasion and the moment n is greater than or equal to the processing time;
the second sensing occasions are in a Kth PBPS occasion, wherein K is a positive integer;
a quantity of overlapping parts between the second sensing occasions and the first sensing occasions is less than or equal to a first threshold, or the quantity of the overlapping parts is greater than or equal to a second threshold, or a proportion of the overlapping parts in the first sensing occasions is less than or equal to an eleventh ratio, or the proportion of the overlapping parts in the first sensing occasions is greater than or equal to a twelfth ratio;
a quantity of non-overlapping parts between the first sensing occasions and the second sensing occasions is less than or equal to a third threshold, or the quantity of the non-overlapping parts is greater than or equal to a fourth threshold, or a proportion of the non-overlapping parts in the first sensing occasions is less than or equal to a thirteenth ratio, or the proportion of the non-overlapping parts in the first sensing occasions is greater than or equal to a fourteenth ratio;
an available resource set corresponding to the second sensing occasions at least partially overlaps an available resource set corresponding to the first sensing occasions;
a quantity of resources of an overlapping part between the available resource set corresponding to the second sensing occasions and the available resource set corresponding to the first sensing occasions is less than or equal to a fifth threshold, or the quantity of the resources of the overlapping part is greater than or equal to a sixth threshold, or a proportion of the quantity of the resources of the overlapping part in the available resource set corresponding to the second sensing occasions or the available resource set corresponding to the first sensing occasions is less than or equal to a fifteenth ratio, or the proportion of the overlapping part in the available resource set corresponding to the second sensing occasion or the available resource set corresponding to the first sensing occasions is greater than or equal to a sixteenth ratio; and
a condition determined by the terminal.

22. The apparatus according to claim 18, wherein the apparatus further comprises:
a first execution module, configured for the terminal to skip, in a case that the second preset condition is satisfied, determining a sensing occasion and/or triggering sensing, wherein
the second preset condition comprises one or more of the following:
one or more items of the first preset condition are not satisfied;
at least some sensing occasions are contiguous, and a quantity of the sensing occasions or a quantity of the contiguous sensing occasions exceeds a seventh threshold; and
the quantity of the preset occasions in the available resource set is less than or equal to j×P-processing time, wherein j is a positive integer, P is a seventh reservation period value or the P is an eighth reservation period value used for determining PBPS occasions, and the processing time is greater than or equal to a time required for decoding SCI and/or for preparing to report a target resource.

23. The apparatus according to claim 20, wherein the first value, the second value, the third value, the fourth value, the fifth value and/or the sixth value is a first preset value or a product of the first preset value and an adjustment coefficient; and
the first preset value comprises any one of the following:
a minimum quantity of sensing occasions;
a minimum resource quantity of an available resource set;
duration of the processing time;
a weighted sum of the minimum quantity of sensing occasions and the minimum resource quantity of the available resource set;
a weighted sum of the minimum quantity of sensing occasions, the minimum resource quantity of the available resource set, and the duration of the processing time; and
a weighted sum of the minimum quantity of sensing occasions and the duration of the processing time.

24. The apparatus according to claim 20, wherein
a quantity of sensing occasions, prediction occasions, PBPS occasions, and/or CPS occasions in the first condition, and/or a quantity of sensing occasions, preset occasions, PBPS occasions, and/or CPS occasions in the second condition is a quantity of sensing occasions, preset occasions, PBPS occasions, and/or CPS occasions in a first period; and
the first period comprises one or more of the following:
at least part between a first moment and a second moment, wherein the first moment is a moment n, or the moment n plus a first preset offset, or the moment n minus a second preset offset, the moment n is a moment of triggering the first process, the second moment is a start point of an available resource set, or the start point of the available resource set plus a third preset offset, or the start point of the available resource set minus a fourth preset offset, or a first time-domain unit in the available resource set, or the first time-domain unit in the available resource set plus a fifth preset offset, or the first time-domain unit in the available resource set plus a sixth preset offset; and
a preset time range.

25. The apparatus according to claim 20, wherein the first condition and/or the second condition further comprises one or more of the following:
a quantity of determined and/or triggered sensing occasions of the sensing occasions is greater than or equal to an eighth threshold, or the quantity of the triggered sensing occasions is less than or equal to a ninth threshold, or a proportion of the triggered sensing occasions in the CPS occasions is greater than or equal to a thirteenth ratio, or the proportion is less than or equal to a fourteenth ratio;
a quantity of the second sensing occasions of the sensing occasions is greater than or equal to a tenth threshold, or the quantity of the second sensing occasions is less than or equal to an eleventh threshold, or a proportion of the second sensing occasions in the sensing occasions is greater than or equal to a fifteenth ratio, or the proportion of the second sensing occasions in the sensing occasions is less than or equal to a sixteenth ratio;
a quantity of non-monitor occasions of the sensing occasions is greater than or equal to an eleventh threshold, or the quantity of the non-monitor occasions is less than or equal to a twelfth threshold, or a proportion of the non-monitor occasions in the sensing occasions is greater than or equal to a seventeenth ratio, or the proportion of the non-monitor occasions in the sensing occasions is less than or equal to an eighteenth ratio;
a quantity of first occasions of the sensing occasions is greater than or equal to a twelfth threshold, or the quantity of the first occasions is less than or equal to a thirteenth threshold, or a proportion of the first occasions in the sensing occasions is greater than or equal to a nineteenth ratio, or the proportion of the first occasions in the sensing occasions is less than or equal to a twentieth ratio, and the first occasions are occasions in a resource pool corresponding to the first process;
a quantity of second occasions of the sensing occasions is greater than or equal to a fourteenth threshold, or the quantity of the second occasions is less than or equal to a fifteenth threshold, or a proportion of the second occasions in the sensing occasions is greater than or equal to a twenty-first ratio, or the proportion of the second occasions in the sensing occasions is less than or equal to a twenty-second ratio, and the second occasion is an occasion used for receiving and/or sensing;
a start point of the sensing occasions is less than or equal to a start point of a preset time range; and
an end point of the sensing occasions is greater than or equal to a second moment, the second moment is a start point of an available resource set, or the start point of the available resource set plus a third preset offset, or the start point of the available resource set minus a fourth preset offset, or a first resource in the available resource set plus a fifth preset offset, or the first resource in the available resource set plus a sixth preset offset.

26. The apparatus according to claim 20, wherein
the first determining module is further configured to execute one or more of the following in a case that the terminal determines that the first condition is satisfied:
determining, by the terminal, the available resource set;
determining, by the terminal, the sensing occasions and/or triggering, by the terminal, sensing; and
determining, by the terminal, a target resource; and
the apparatus further comprises a second execution module, configured to execute one or more of the following in a case that the terminal determines that the first condition is not satisfied:
performing, by the terminal, random resource selection; and
not triggering sensing and/or canceling sensing.

27. The apparatus according to claim 20, wherein
the first determining module is further configured to execute one or more of the following in a case that the terminal determines that the second condition is satisfied:
determining, by the terminal, the sensing occasions and/or triggering, by the terminal, sensing; and
determining, by the terminal, a target resource; and
the apparatus further comprises: a third execution module, configured to execute one or more of the following in a case that the terminal determines that the second condition is not satisfied:
determining, by the terminal, the available resource set;
determining, by the terminal, the sensing occasions and/or triggering, by the terminal, sensing; and
determining, by the terminal, a target resource.

28. The apparatus according to claim 20, wherein
the first determining module is further configured to execute one or more of the following in a case that the terminal first determines that the first condition is satisfied and then determines that the second condition is satisfied, or in a case that the terminal first determines that the first condition is satisfied and then determines that the second condition is not satisfied:
determining, by the terminal, the available resource set;
determining, by the terminal, the sensing occasions and/or triggering, by the terminal, sensing; and
determining, by the terminal, a target resource.

29. The apparatus according to claim 20, wherein
the first determining module is further configured to execute one or more of the following in a case that the terminal first determines that the first condition is satisfied and then determines that the second condition is satisfied:
determining, by the terminal, the available resource set;
determining, by the terminal, the sensing occasions and/or triggering, by the terminal, sensing; and
determining, by the terminal, a target resource; and
the first determining module is further configured to execute one or more of the following in a case that the terminal first determines that the second condition is satisfied and then determines that the first condition is not satisfied:
determining, by the terminal, the sensing occasions and/or triggering, by the terminal, sensing; and
determining, by the terminal, a target resource; and
the apparatus further comprises a fourth execution module, configured to execute one or more of the following in a case that the terminal first determines that the second condition is satisfied and then determines that the first condition is not satisfied:
performing, by the terminal, random resource selection; and
not triggering sensing and/or canceling sensing.

30. The apparatus according to claim 20, wherein the first value, the second value, the third value, the fourth value, and/or the fifth value is obtained in a preset manner, and that the first condition is satisfied comprises:
the terminal can satisfy the first condition in a case that the first value, the second value, the third value, the fourth value, and/or the fifth value is obtained in the preset manner;
or
the terminal does not satisfy the first condition in a case that the first value, the second value, the third value, the fourth value, and/or the fifth value is obtained in the preset manner, and the terminal determines that the first value, the second value, the third value, the fourth value, and/or the fifth value is 0; and
the preset manner is pre-configured, specified by a protocol, indicated by another terminal, and/or indicated by a higher layer.

31. The apparatus according to claim 20, wherein the apparatus further comprises:
a first reporting module, configured for the terminal to report the available resource set; and
a second determining module, configured for the terminal to determine sensing occasions and/or trigger sensing, and determine a target resource according to the determined sensing occasions and/or the triggered sensing.

32. The apparatus according to claim 20, wherein the apparatus further comprises:
a fifth execution module, configured for the terminal to report and/or select resources corresponding to sensing occasions.

33. The apparatus according to claim 32, wherein the fifth execution module is further configured to:
indicate, for the terminal through first indication information, that the reported resources have the corresponding sensing occasions.

34. The apparatus according to claim 32, wherein the sensing occasions comprise CPS occasions, or the sensing occasions comprise PBPS occasions and CPS occasions.

35. A terminal, comprising a processor, a memory, and a program stored on the memory and executable on the processor, wherein the program, when executed by the processor, implements the steps of the method according to any one of claims 1 to 17.

36. A readable storage medium, storing a program or instructions, wherein the program or the instructions, when being executed by a processor, implement the steps of the method according to any one of claims 1 to 17.

37. A chip, comprising a processor and a communication interface, wherein the communication interface is coupled to the processor, and the processor is configured to run a program or instructions to implement the steps of the method according to any one of claims 1 to 17.

38. A computer program product, stored in a non-transient readable storage medium, the computer program product is executed by at least one processor to implement the steps of the method according to any one of claims 1 to 17.

39. A communication device, configured to perform the steps of the method according to any one of claims 1 to 17.
